# EUROPEAN PATENT SPECIFICATION

(11) **EP 3 000 706 B1**
(45) Date of publication and mention of the grant of the patent: **08.05.2019**
(21) Application number: 14820431.6
(22) Date of filing: 30.06.2014
(51) Int. Cl.: B62K 5/01, B62K 5/027, B62K 5/08, B62K 5/10, B60B 27/02

(54) **VEHICLE**
FAHRZEUG
VÉHICULE

(30) Priority: 01.07.2013 JP 2013138475; 01.07.2013 JP 2013138476
(43) Date of publication of application: 30.03.2016
(73) Proprietor: Yamaha Hatsudoki Kabushiki Kaisha, Iwata-shi, Shizuoka 438-8501 (JP)
(72) Inventor: ASANO, Daisuke, Iwata-shi Shizuoka 438-8501 (JP); SASAKI, Kaoru, Iwata-shi Shizuoka 438-8501 (JP)
(74) Representative: Grünecker Patent- und Rechtsanwälte PartG mbB
(86) International application number: PCT/JP2014/067474
(87) International publication number: WO 2015/002161

(56) References cited:
- WO-A1-2012/007819
- WO-A1-2012/007819
- WO-A2-2009/069170
- CN-A- 101 774 414
- JP-A- S61 157 481
- JP-U- S57 127 915
- US-B1- 6 474 432

## Description

### [Technical Field]

The present invention relates to a vehicle including a body frame that can lean and two front wheels.

### [Background Art]

A vehicle is known which includes a body frame and two front wheels, the body frame being configured to lean to the right when the vehicle turns to the right and to lean to the left when the vehicle turns to the left (refer to Patent Literatures 1, 2 and Non-Patent Literature 1, for example).

The vehicle including the body frame that can lean and the two front wheels includes a link mechanism. The link mechanism includes an upper cross portion and a lower cross portion. In addition, the link mechanism also includes a right side portion which supports right portions of the upper cross portion and the lower cross and a left side portion which supports left portions of the upper cross portion and the lower cross portion. Middle portions of the upper cross portion and the lower cross portion are supported on the body frame. The upper cross portion and the lower cross portion are supported on the body frame so as to turn about axes that extend substantially in a front-and-rear direction of the body frame. The upper cross portion and the lower cross portion turn relative to the body frame as the body frame leans, whereby a relative position of the two front wheels in an up-and-down direction of the body frame changes. The upper cross portion and the lower cross portion are provided above the two front wheels in relation to the up-and-down direction of the body frame in such a state that the vehicle is in the upright state.

The vehicle including the body frame which can lean and the two front wheels includes a suspension device which includes a right support member which supports the right front wheel so as to move in an up-and-down direction of the body frame and a left support member which supports the left front wheel so as to move in the up-and-down direction of the body frame. The right support portion supports the right front wheel so as to turn around an axis which extends in the up-and-down direction. The left support portion supports the left front wheel so as to turn around an axis which extends in the up-and-down direction. The vehicles described in Patent Literatures 1 and 2 further include a handlebar, a steering shaft and a turn transmitting mechanism. The handlebar is secured to the steering shaft. The steering shaft is supported so as to turn relative to the body frame. Turning the handlebar triggers a turn of the steering shaft. The turn transmitting mechanism transmits a turn of the steering shaft to the right front wheel and the left front wheel.

### [Prior Art Document]

### [Patent Document]

[Patent Literature 1] US Patent No. 4,351,410
[Patent Literature 2] U.S. Design Patent No. D547, 242
[Patent Document 3] Chinese Application Publication No. CN 101 774 414 A
[Patent Document 4] International Publication No. WO 2012/007819 A1

### [Non-Patent Literature]

[Non-Patent Literature 1] Catalogo parti di ricambio, MP3 300 ie LT Mod. ZAPM64102, Piaggio

### [Summary of the Invention]

### [Problem that the Invention is to Solve]

In the vehicle described in Patent Literature 1, the right support portion includes a right support element which is provided directly on the right side of the right front wheel to support the right front wheel and a left support element which is provided directly on the left side of the right front wheel to support the right front wheel. In addition, the left support portion includes a right support element which is provided directly on the right side of the left front wheel to support the left front wheel and a left support element which is provided directly on the left side of the left front wheel to support the left front wheel. In this way, in the vehicle
of Patent Literature 1, the right front wheel and the left front wheel are each supported so as to rotate while being held by the right support element and the left support element therebetween. Because of this, the strength for loads that the right front wheel and the left front wheel bear from the road surface is easily ensured with the simple construction.

However, the right support element for the right front wheel, the right front wheel, the left support element for the right front wheel, the right support element for the left front wheel, the left front wheel and the left support element for the left front wheel are aligned in the left-and-right direction of the vehicle. Moreover, the body frame, the right front wheel, the right support portion, the left front wheel and the left support portion change their relative positional relationship when the body frame is caused to lean or the handlebar is turned. The left-and-right width of the vehicle including the body frame which can lean and the two front wheels is increased to ensure the space which permits the change in the relative positional relationship.

Then, Patent Literature 2 and Non-Patent Literature 1 propose the technology which reduces the left-and-right width of the vehicle including the body frame which can lean and the two front wheels. In the vehicles described in Patent Literature 2 and Non-Patent Literature 1, a right support portion includes a cantilever support element which is provided directly on the left side of a right front wheel to cantilever the right front wheel. In addition, a left support portion includes a cantilever support element which is provided directly on the right of a left front wheel to cantilever the left front wheel. In the vehicles described in Patent Literature 2 and Non-Patent Literature 1, since the right front wheel and the left front wheel are cantilevered, a left-and-right width of a body frame is reduced, compared with the vehicle described in Patent Literature 1.

However, in Patent Literature 2 and Non-Patent Literature 1, since the supporting construction of the right front wheel and the left front wheel is changed from the supporting construction as described in Patent Literature 1 in which the wheels are supported at both the sides thereof to the cantilever supporting construction, the rigidity of the supporting construction needs to be strengthened in order to increase the rigidity with which the right front wheel and the left front wheel are supported.

Then, the vehicles of Patent Literature 2 and Non-Patent Literature 1 adopt a hub device. The supporting rigidity is ensured by adopting this configuration. The hub device includes an outer member which is supported on the right support portion or the left support portion so as not to rotate and an inner member which is supported so as to rotate in an interior of the outer member via a bearing. A brake disc and a wheel are detachably supported on the inner member with a bolt. In addition, the outer member includes a brake caliper support portion which supports a brake caliper. In this way, by adopting the outer member which supports therein the inner member via the bearing, the supporting rigidity is strengthened.
Patent Document 3 discloses a vehicle comprising: a body frame which can lean to the right of the vehicle when the vehicle turns right and can lean to the left of the vehicle when the vehicle turns left; a right front wheel which includes a right tire and a right wheel which supports the right tire and a left front wheel which includes a left tire and a left wheel which supports the left tire the right front wheel and the left front wheel being provided so as to be aligned in a left-and-right direction of the body frame; and a suspension device which includes a right shock absorbing device which includes a right telescopic element configured to support the right wheel so as to rotate about a right front wheel axis and to absorb a displacement of the right front wheel in an up-and-down direction of the body frame and a left shock absorbing device which includes a left telescopic element configured to support the left wheel so as to rotate about a left front wheel axis and to absorb a displacement of the left front wheel in the up-and-down direction of the body frame and which supports the right front wheel and the left front wheel on the body frame in such a state that the right front wheel and the left front wheel can be displaced in the up-and-down direction of the body frame and are aligned in the left-and-right direction of the body frame, wherein the suspension device supports the right wheel in a cantilever state so as to turn about a right steering axis which extends in a perpendicular direction to the right front wheel axis and to be displaced in the up-and-down direction relative to the body frame at a lower portion of the right telescopic element and supports the left wheel in a cantilever state so as to turn about a left steering axis which extends in a perpendicular direction to the left front wheel axis and to be displaced in the up-and-down direction relative to the body frame at a lower portion of the left telescopic element, and wherein the right telescopic element and the left telescopic element are disposed laterally symmetrical.
Patent Document 4 discloses a vehicle provided with a frame, two front steering wheels, a steering pipe rotatably connected to the frame and rigidly connected to two supporting assemblies, one for each front steering wheel. On each of the supporting assemblies the fixed portions of two telescopic elements are constrained. Each pair of telescopic elements is cantilever-mounted as regards the relative steering wheel.

Incidentally, the markets desire a vehicle having a left-and-right size of the body frame which is smaller that those of the vehicles described in Patent Literature 2 and Non-Patent Literature 1.

An object of the invention is to provide a vehicle having a body frame which can lean and two front wheels which can realize a further reduction in left-and-right size of the vehicle while ensuring sufficient rigidity to withstand loads which wheels bear from a road surface.

### [Means for Solving the Problem]

(1) With a view to achieving the object described above, the invention provides a vehicle according to independent claim 1. Preferred embodiments are set out in the dependent claims. According to a mode which the invention can take, there is provided a vehicle I as described in independent claim 1.

The inventors have studied in detail the supporting construction of the right front wheel and the left front wheel of the vehicles described in Patent Literature 2 and Non-Patent Literature 1. The vehicles of Patent Literature 2 and Non-Patent Literature 1 adopt a bottom link suspension device. The right front wheel and the left front wheel are each supported on a swing lever member which is supported so as to swing at the lower portion of the suspension device via a hub device. The rigidity of the supporting construction is ensured by adopting the construction described above.

Then, the inventors have studied to change the shape of the suspension device. Specifically, the inventors have studied a construction for supporting the right front wheel and the left front wheel in a cantilever state at lower portions of the telescopic elements without using a swing lever. Namely, the inventors have studied the construction for supporting the right front wheel and the left front wheel in the cantilever state by making use of the rigidity of the telescopic elements. More specifically, the following construction has been studied. The suspension device supports the right wheel in a cantilever state so as to turn about a right steering axis which extends in a perpendicular direction to a right front wheel axis and to be displaced in the up-and-down direction relative to the body frame at the lower portion of the right telescopic element by a right shaft member which penetrates the right telescopic element and the right bearing portion. In addition, the suspension device supports the left wheel in a cantilever state so as to turn about a left steering axis which extends in a perpendicular direction to a left front wheel axis and to be displaced in the up-and-down direction relative to the body frame at the lower portion of the left telescopic element by a left shaft member which penetrates the left telescopic element and the left bearing portion.

According to the vehicle of the invention, since the right wheel and the left wheel are cantilevered, compared with the construction in which the right wheel and the left wheel are supported on both the sides thereof, the width of the vehicle can be reduced in relation to the left-and-right direction of the body frame.

Additionally, the right wheel is supported in the cantilever state at the lower portion of the right telescopic element and the left wheel is supported in the cantilever state at the lower portion of the left telescopic element. Because of this, the rigidity of the right telescopic element and the left telescopic element can be increased to thereby increase the supporting rigidity with which the right wheel is supported on the right telescopic element and the supporting rigidity with which the left wheel is supported on the left telescopic element. The rigidity of the right telescopic element and the left telescopic element can be increased, for example, by increasing the diameters thereof. A second moment of area which is an index indicating the rigidity of the right telescopic element and the left telescopic element increases in proportion to a fourth power of the diameter of the right telescopic element and the left telescopic element. Since the second moment of area can be increased sufficiently only by increasing the diameter a little, even in the event that required rigidity is ensured, it is difficult for the right telescopic element and the left telescopic element to be enlarged.

Additionally, the right shaft member penetrates the right telescopic element of which the diameter is increased and the left shaft member penetrates the left telescopic element of which the diameter is increased. Because of this, the right telescopic element ensures the large area where the right shaft member is supported, and the left telescopic element ensures the large area where the left shaft member is supported. This enhances the rigidity with which the right telescopic element supports the right shaft member and the rigidity with which the left telescopic element supports the left shaft member. Namely, the supporting rigidity of the right shaft member and the left shaft member are also enhanced by using the right telescopic element and the left telescopic element of which the rigidity is enhanced.

The right telescopic element and the left telescopic element, of which the rigidity is enhanced while restricted from being enlarged in size, are disposed laterally symmetrical and the right shaft member and the left shaft member are disposed laterally symmetrical, whereby the whole of the vehicle is reduced in size in relation to the left-and-right direction thereof.

From the reasons described above, it is possible to provide the vehicle which realizes the further reduction in left-and-right size of the vehicle while ensuring the sufficient rigidity to withstand the loads that the wheels bear from the road surface.

In the vehicle according to the invention, the following configurations may be adopted.

(2) The right hub portion is formed in a position where the right hub portion lies nearer to the right telescopic element than the right rim portion in the left-and-right direction of the body frame in such a state that the vehicle is in the upright state, and the left hub portion is formed in a position where the left hub portion lies nearer to the left telescopic element than the left rim portion in the left-and-right direction of the body frame in such a state that the vehicle is in the upright state.

A load that the right front wheel bears from the road surface is inputted into the right shaft member via the right hub portion. Since the right shaft member is supported in such a state that the right shaft member penetrates the right telescopic element, a bending moment acts on the right telescopic element centered at a point where the right shaft member is supported on the right telescopic element in such a way as to bend the point supported by the right hub portion upwards. Since the right hub portion is provided nearer to the right telescopic element than the right rim portion, the bending moment acting on the right shaft portion is reduced.

A load that the left front wheel bears from the road surface is inputted into the left shaft member via the left hub portion. Since the left shaft member is supported in such a state that the left shaft member penetrates the left telescopic element, a bending moment acts on the left telescopic element centered at a point where the left shaft member is supported on the left telescopic element in such a way as to bend the point supported by the left hub portion upwards. Since the left hub portion is provided nearer to the left telescopic element than the left rim portion, the bending moment acting on the left shaft portion is reduced.

Consequently, it is easy to ensure the supporting rigidity with which the right shaft member and the left shaft member are supported, thereby making it possible to make the supporting construction smaller in size.

In the vehicle according to the invention, the following configurations are adopted. (3) The right bearing portion includes a plurality of bearings which are aligned in the left-and-right direction of the body frame, and a left-and-right center of the plurality of bearings is provided in a position where the left-and-right center lies nearer to the right telescopic element than a left-and-right center of the right rim portion in such a state that the vehicle is in the upright state, and
the left bearing portion includes a plurality of bearings which are aligned in the left-and-right direction of the body frame, and a left-and-right center of the plurality of bearings is provided in a position where the left-and-right center lies nearer to the left telescopic element than a left-and-right center of the left rim portion in such a state that the vehicle is in the upright state.

It is noted that the left-and-right center of the plurality of bearings means a center between a right end portion of the right end bearing and a left end portion of the left end bearing in relation to the left-and-right direction of the body frame.

A load that the right front wheel bears from the road surface is inputted into the right shaft member via the right bearing portion provided at the right hub portion. Since the right shaft member is supported in such a state that the right shaft member penetrates the right telescopic element, a bending moment acts on the right telescopic element centered at a point where the right shaft member is supported on the right telescopic element in such a way as to bend the point supported by the right bearing portion upwards. Since the left-and-right center of the right bearing portion is provided nearer to the right telescopic element than the left-and-right center of the right rim portion, the bending moment acting on the right shaft portion is reduced.

A load that the left front wheel bears from the road surface is inputted into the left shaft member via the left bearing portion provided at the left hub portion. Since the left shaft member is supported in such a state that the left shaft member penetrates the left telescopic element, a bending moment acts on the left telescopic element centered at a point where the left shaft member is supported on the left telescopic element in such a way as to bend the point supported by the left bearing portion upwards. Since the left-and-right center of the left bearing portion is provided nearer to the left telescopic element than the left-and-right center of the left rim portion, the bending moment acting on the left shaft portion is reduced.

Consequently, it is easy to ensure the supporting rigidity with which the right shaft member and the left shaft member are supported, thereby making it possible to make the supporting construction smaller in size.

In the vehicle according to the invention, the following configurations may be adopted.

(4) The right bearing portion includes the plurality of bearings which are aligned in the left-and-right direction of the body frame, and the bearing of the plurality of bearings which is provided in a position nearer to the right telescopic element in the left-and-right direction of the body frame is provided at a middle portion of the right shaft member in the left-and-right direction of the body frame in such a state that the vehicle is in the upright state, and
the left bearing portion includes the plurality of bearings which are aligned in the left-and-right direction of the body frame, and the bearing of the plurality of bearings which is provided in a position nearer to the left telescopic element in the left-and-right direction of the body frame is provided at a middle portion of the left shaft member in the left-and-right direction of the body frame in such a state that the vehicle is in the upright state.

A load that the right front wheel bears from the road surface is inputted into the right shaft member via the right bearing portion provided at the right hub portion. Since the right shaft member is supported in such a state that the right shaft member penetrates the right telescopic element, a bending moment acts on the right telescopic element centered at a point where the right shaft member is supported on the right telescopic element in such a way as to bend the point supported by the right bearing portion upwards. A left portion of the right shaft member is supported by the right telescopic element, the bearing lying nearer to the right telescopic element is provided at the middle portion of the right shaft member, and the fulcrum and point of action of the bending moment lie near to each other. This makes it easy to reduce the bending moment acting on the right shaft member.

A load that the left front wheel bears from the road surface is inputted into the left shaft member via the left bearing portion provided at the left hub portion. Since the left shaft member is supported in such a state that the left shaft member penetrates the left telescopic element, a bending moment acts on the left telescopic element centered at a point where the left shaft member is supported on the left telescopic element in such a way as to bend the point supported by the left bearing portion upwards. A right portion of the left shaft member is supported by the left telescopic element, the bearing lying nearer to the left telescopic element is provided at the middle portion of the left shaft member, and the fulcrum and point of action of the bending moment lie near to each other. This makes it easy to reduce the bending moment acting on the left shaft member.

Consequently, it is easy to ensure the supporting rigidity with which the right shaft member and the left shaft member are supported, thereby making it possible to make the supporting construction smaller in size.

In the vehicle according to the invention, the following configurations may be adopted.

(5) The right wheel has a right disc fixing portion where a right brake disc which rotates together with the right wheel is fixed, and the left wheel has a left disc fixing portion where a left brake disc which rotates together with the left wheel is fixed.

The right telescopic element which the right shaft member penetrates at a lower portion thereof supports a right brake caliper which is configured to hold the right brake disc to apply a braking force to the right front wheel, and the left telescopic element which the left shaft member penetrates at a lower portion thereof supports a left brake caliper which is configured to hold the left brake disc to apply a braking force to the left front wheel.

The right bearing portion includes the plurality of bearings which are aligned in the left-and-right direction of the body frame, and the bearing of the plurality of bearings which is provided in a position lying nearer to the right telescopic element in the left-and-right direction of the body frame is provided in a position where the bearing overlaps the right disc fixing portion in relation to the left-and-right direction of the body frame, and the left bearing portion includes the plurality of bearings which are aligned in the left-and-right direction of the body frame, and the bearing of the plurality of bearings which is provided in a position lying nearer to the left telescopic element in the left-and-right direction of the body frame is provided in a position where the bearing overlaps the left disc fixing portion in relation to the left-and-right direction of the body frame.

When the right brake caliper applies the braking force to the right front wheel, a load is generated in the right disc fixing portion where the right brake disc is fixed and the right telescopic element where the right caliper is supported. This requires the right disc fixing portion and the right telescopic element to ensure the rigidity against these loads.

When the left brake caliper applies the braking force to the left front wheel, a load is generated in the left disc fixing portion where the left brake disc is fixed and the left telescopic element where the left caliper is supported. This requires the left disc fixing portion and the left telescopic element to ensure the rigidity against these loads.

Since the rigidity of the right telescopic element is enhanced although it is cantilevered, the right brake caliper is supported strongly and rigidly on the right telescopic element.

Additionally, since the bearing lying nearer to the right telescopic element is supported with high rigidity, the supporting rigidity of the right wheel is enhanced on the circumference of the bearing. Since the right disc fixing portion is provided in the area where the supporting rigidity is high, the rigidity of the right disc fixing portion is ensured.

Since the rigidity of the left telescopic element is enhanced although it is cantilevered, the left brake caliper is supported strongly and rigidly on the left telescopic element. Additionally, since the bearing lying nearer to the left telescopic element is supported with high rigidity, the supporting rigidity of the left wheel is enhanced on the circumference of the bearing. Since the left disc fixing portion is provided in the area where the supporting rigidity is high, the rigidity of the left disc fixing portion is ensured.

In the vehicle according to the invention, the following configurations may be adopted.

(6) The right wheel has a right brake disc which rotates together with the right wheel and the left wheel has a left brake disc which rotates together with the left wheel.

The right telescopic element which the right shaft member penetrates at a lower portion thereof supports a right brake caliper which is configured to hold the right brake disc to apply a braking force to the right front wheel, and the left telescopic element which the left shaft member penetrates at a lower portion thereof supports a left brake caliper which is configured to hold the left brake disc to apply a braking force to the left front wheel.

Since the right telescopic element supports the right shaft member at the lower portion thereof while allowing the right shaft member to penetrate it, the right telescopic element has the high rigidity. Since the right brake caliper is supported by the right telescopic element having the high rigidity, the right brake caliper is supported strongly and rigidly on the right telescopic element. Since the right brake caliper is supported by utilizing the right telescopic element having the enhanced strength to enhance the supporting rigidity of the right wheel, a separate construction for supporting the right brake caliper is not necessary or it is difficult for the construction for supporting the right brake caliper to be enlarged in size.

Since the left telescopic element supports the left shaft member at the lower portion thereof while allowing the left shaft member to penetrate it, the left telescopic element has the high rigidity. Since the left brake caliper is supported by the left telescopic element having the high rigidity, the left brake caliper is supported strongly and rigidly on the left telescopic element. Since the left brake caliper is supported by utilizing the left telescopic element having the enhanced strength to enhance the supporting rigidity of the left wheel, a separate construction for supporting the left brake caliper is not necessary or it is difficult for the construction for supporting the left brake caliper to be enlarged in size.

Consequently, it is possible to support the right brake caliper and the left brake caliper with high rigidity without enlarging the vehicle in size.

In the vehicle according to the invention, the following configurations may be adopted.

(7) The right wheel has a right disc fixing portion where a right brake disc which rotates together with the right wheel is fixed, and the left wheel has a left disc fixing portion where a left brake disc which rotates together with the left wheel is fixed.

The right telescopic element which the right shaft member penetrates at a lower portion thereof supports a right brake caliper which is configured to hold the right brake disc to apply a braking force to the right front wheel, and the left telescopic element which the left shaft member penetrates at a lower portion thereof supports a left brake caliper which is configured to hold the left brake disc to apply a braking force to the left front wheel.

A length of a space defined between the right brake caliper and the right rim portion of the right front wheel in relation to a radial direction of the right front wheel is greater than a length of a portion where the right brake caliper overlaps the right brake disc, and a length of a space defined between the left brake caliper and the left rim portion of the left front wheel in relation to a radial direction of the left front wheel is greater than a length of a portion where the left brake caliper overlaps the left brake disc.

Since the right telescopic element supports the right shaft member at the lower portion thereof while allowing the right shaft member to penetrate it, the right telescopic element has the high rigidity. Since the right brake caliper is supported by the right telescopic element having the high rigidity, the right brake caliper is supported strongly and rigidly on the right telescopic element. Since the right brake caliper is supported by utilizing the right telescopic element having the enhanced strength to enhance the supporting rigidity of the right wheel, a separate construction for supporting the right brake caliper is not necessary or it is difficult for the construction for supporting the right brake caliper to be enlarged in size.

Since the left telescopic element supports the left shaft member at the lower portion thereof while allowing the left shaft member to penetrate it, the left telescopic element has the high rigidity. Since the left brake caliper is supported by the left telescopic element having the high rigidity, the left brake caliper is supported strongly and rigidly on the left telescopic element. Since the left brake caliper is supported by utilizing the left telescopic element having the enhanced strength to enhance the supporting rigidity of the left wheel, a separate construction for supporting the left brake caliper is not necessary or it is difficult for the construction for supporting the left brake caliper to be enlarged in size.

In addition, in removing the right wheel from the vehicle, the right brake caliper needs to be shifted from the right brake disc by the length over which the right brake caliper overlaps the right brake disc in relation to the radial direction of the right front wheel. Since the length of the space defined between the right brake caliper and the right rim portion of the right front wheel is greater than the length of the portion where the right brake caliper overlaps the right brake disc, it is easy to move the right brake caliper to a position where the right brake caliper does not interfere with the right brake disc by using the space between the right brake caliper and the right rim portion of the right front wheel.

In addition, in removing the left wheel from the vehicle, the left brake caliper needs to be shifted from the left brake disc by the length over which the left brake caliper overlaps the left brake disc in relation to the radial direction of the left front wheel. Since the length of the space defined between the left brake caliper and the left rim portion of the left front wheel is greater than the length of the portion where the left brake caliper overlaps the left brake disc, it is easy to move the left brake caliper to a position where the left brake caliper does not interfere with the left brake disc by using the space between the left brake caliper and the left rim portion of the left front wheel.

Consequently, the vehicle is provided which can support the right brake caliper and the left brake caliper with the high rigidity without enlarging the vehicle in size and which facilitates the maintenance thereof.

In the vehicle according to the invention, the following configurations may be adopted.

(8) A right end portion of the right shaft member is provided in a position where the right end portion lies nearer to the right telescopic element than a right end portion of the right hub portion in the left-and-right direction of the body frame in such a state that the vehicle is in the upright state, and a left end portion of the left shaft member is provided in a position where the left end portion lies nearer to the left telescopic element than a left end portion of the left hub portion in the left-and-right direction of the body frame in such a state that the vehicle is in the upright state.

A load that the right front wheel bears from the road surface is inputted into the right shaft member via the right hub portion. Since the right shaft member is supported in such a state that the right shaft member penetrates the right telescopic element, a bending moment acts on the right telescopic element centered at a point where the right shaft member is supported on the right telescopic element in such a way as to bend the point supported by the right bearing portion upwards. Since the right end portion of the right shaft member is positioned nearer to the right telescopic element than the right end portion of the right hub portion, the fulcrum and point of action of the bending moment are provided nearer to each other. This makes it easy to reduce the bending moment acting on the right shaft member.

A load that the left front wheel bears from the road surface is inputted into the left shaft member via the left hub portion. Since the left shaft member is supported in such a state that the left shaft member penetrates the left telescopic element, a bending moment acts on the left telescopic element centered at a point where the left shaft member is supported on the left telescopic element in such a way as to bend the point supported by the left bearing portion upwards. Since the left end portion of the left shaft member is positioned nearer to the left telescopic element than the left end portion of the left hub portion, the fulcrum and point of action of the bending moment are provided nearer to each other. This makes it easy to reduce the bending moment acting on the left shaft member.

Consequently, the required supporting rigidity with which the right shaft member and the left shaft member are supported is reduced, whereby the supporting construction is easily made smaller in size.

In the vehicle according to the invention, the following configurations may be adopted.

(9) The right wheel has a right cap which covers the right end portion of the right shaft member and which is so shaped that at least part thereof overlaps the right shaft member in relation to the left-and-right direction of the body frame, and
the left wheel has a left cap which covers the left end portion of the left shaft member and which is so shaped that at least part thereof overlaps the right shaft member in relation to the left-and-right direction of the body frame.

The right end portion of the right shaft member can be protected by the right cap. Additionally, since at least part of the right cap overlaps the right shaft member in relation to the left-and-right direction of the body frame, although the right cap is provided, it is difficult for the vehicle to be enlarged in size in the left-and-right direction.

The left end portion of the left shaft member can be protected by the left cap. Additionally, since at least part of the left cap overlaps the left shaft member in relation to the left-and-right direction of the body frame, although the left cap is provided, it is difficult for the vehicle to be enlarged in size in the left-and-right direction.

In the vehicle according to the invention, the following configurations may be adopted.

(10) The right shaft member penetrates the right telescopic element while pressing at least part of the right bearing portion towards the right telescopic element in an axial direction of the right shaft member and is fastened to the right telescopic element, and
the left shaft member penetrates the left telescopic element while pressing at least part of the left bearing portion towards the left telescopic element in an axial direction of the left shaft member and is fastened to the left telescopic element.

At least part of the right bearing portion is pressed in the axial direction by the right shaft member, whereby the right bearing portion is supported strongly and rigidly on the right telescopic element.

At least part of the left bearing portion is pressed in the axial direction by the left shaft member, whereby the left bearing portion is supported strongly and rigidly on the left telescopic element.

Consequently, the supporting rigidity of the right wheel and the left wheel can be enhanced.

In the vehicle according to the invention, the following configurations may be adopted.

(11) In relation to the radial direction of the right front wheel, the right bearing portion is provided outwards of the right shaft member, and the right wheel is provided outwards of the right bearing portion, and
in relation to the radial direction of the left front wheel, the left bearing portion is provided outwards of the left shaft member, and the left wheel is provided outwards of the left bearing portion.

The cantilever supporting construction can be realized by adopting the cylindrical right shaft member, on an outer circumference of which the right bearing portion is disposed and adopting the cylindrical left shaft member, on an outer circumference of which the left bearing portion is disposed. The right wheel and the left wheel can be cantilevered by using the simple and compact right shaft member and left shaft member.

In the vehicle according to the invention, the following configurations may be adopted. (12) The right wheel has the right brake disc which rotates together with the right wheel, and the left wheel has the left brake disc which rotates together with the left wheel.

The right brake caliper which is configured to hold the right brake disc to apply a braking force to the right front wheel is supported on the right telescopic element, and the left brake caliper which is configured to hold
the left brake disc to apply a braking force to the left front wheel is supported on the left telescopic element.

In relation to the radial direction of the right front wheel, the right bearing portion is provided outwards of the right shaft member, the right brake disc is provided outwards of the right bearing portion, and the right brake caliper is provided outwards of the right brake disc, and
in relation to the radial direction of the left front wheel, the left bearing portion is provided outwards of the left shaft member, the left brake disc is provided outwards of the left bearing portion, and the left brake caliper is provided outwards of the left brake disc.

The cantilever supporting construction can be realized by adopting the cylindrical right shaft member, on an outer circumference of which the right bearing portion is disposed and adopting the cylindrical left shaft member, on an outer circumference of which the left bearing portion is disposed. The right wheel and the left wheel can be cantilevered by using the simple and compact right shaft member and left shaft member.

Additionally, since the position where the right brake caliper presses against the right brake disc can be provided far away from the right wheel axis in relation to the radial direction of the right front wheel, a large braking force can easily be obtained. Additionally, since the position where the left brake caliper presses against the left brake disc can be provided far away from the left wheel axis in relation to the radial direction of the left front wheel, a large braking force can easily be obtained.

In the vehicle according to the invention, the following configurations may be adopted.

(13) the right shaft member has a right bolt element which penetrates the right telescopic element and the right bearing portion and a right nut element which fits on the right bolt element, and
the left shaft member has a left bolt element which penetrates the left telescopic element and the left bearing portion and a left nut element which fits on the left bolt element.

The right shaft portion and the left shaft portion can be provided where the right wheel and the left wheel can be cantilevered strongly and rigidly.

In the vehicle according to the invention, the following configurations may be adopted.

(14) The right shock absorbing device includes a plurality of right telescopic elements which are aligned in a front-and-rear direction of the body frame, and the left shock absorbing device includes a plurality of left telescopic elements which are aligned in the front-and-rear direction of the body frame.

The suspension device supports the right wheel in a cantilever state at a lower portion of the plurality of right telescopic elements which are aligned in the front-and-rear direction of the body frame by using at least one of the right telescopic elements and the right shaft member which penetrates the right bearing portion and supports the left wheel in a cantilever state at a lower portion of the plurality of left telescopic elements which are aligned in the front-and-rear direction of the body frame by using at least one of the left telescopic elements and the left shaft member which penetrates the left bearing portion.

Since the plurality of right telescopic elements are aligned in the front-and-rear direction, the rigidity of the right shock absorbing device can be enhanced higher than when only one right telescopic element is used while restricting the enlargement in size of the vehicle in relation to the left-and-right direction. In addition, the rigidity of the right shock absorbing device can be enhanced higher by using the plurality of right telescopic elements which are thin in diameter while restricting the enlargement in size of the vehicle in relation to the left-and-right direction.

Since the plurality of left telescopic elements are aligned in the front-and-rear direction, the rigidity of the left shock absorbing device can be enhanced higher than when only one left telescopic element is used while restricting the enlargement in size of the vehicle in relation to the left-and-right direction. In addition, the rigidity of the left shock absorbing device can be enhanced higher by using the plurality of left telescopic elements which are thin in diameter while restricting the enlargement in size of the vehicle in relation to the left-and-right direction.

Because of this, it is easy to make the right shock absorbing device and the left shock absorbing device smaller in size in relation to the left-and-right direction, whereby it is easy to ensure the sufficient rigidity while cantilevering the right wheel and the left wheel with the supporting construction which is compact in relation to the left-and-right direction.

### [Brief Description of Drawings]

Fig. 1 is an overall side view of a vehicle according to an embodiment of the invention.
FIG. 2 is a front view of a front portion of the vehicle shown in Fig. 1
FIG. 3 is a plan view of the front portion of the vehicle shown in Fig. 1.
Fig. 4 is a plan view of the front portion of the vehicle in a state where the vehicle shown in Fig. 1 is steered.
Fig. 5 is a front view of the front portion of the vehicle in a state where the vehicle shown in Fig. 1 is caused to lean.
FIG. 6 is a front view of the front portion of the vehicle in a state where the vehicle shown in FIG. 1 is steered and is caused to lean.
Fig. 7 is a side view of the left front wheel as viewed from the right front wheel.
Fig. 8 is a sectional view showing a supporting construction of the left front wheel.
Fig. 9 is a left side view of the left front wheel.

### [Mode for Carrying out the Invention]

Hereinafter, an example of an embodiment of a vehicle 1 according to the present invention will be explained by referring to the accompanying figures.

In this embodiment, the vehicle will be described as being a vehicle having two front wheels and one rear wheel.

### <Overall Configuration>

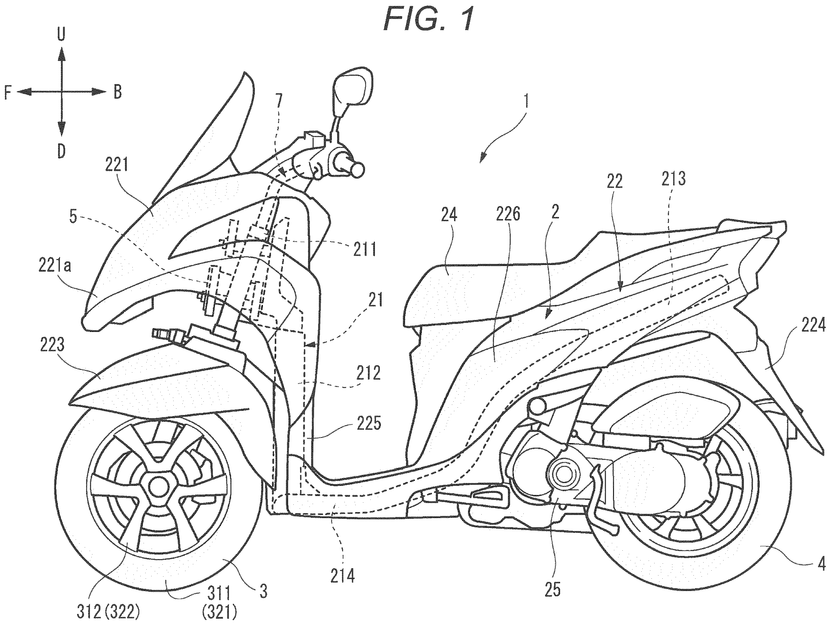

Fig. 1 is a side view of the whole of a vehicle 1 as viewed from the left thereof. Hereinafter, in the drawings, an arrow F denotes a forward direction of the vehicle 1 and an arrow B denotes a rearward direction of the vehicle 1. An arrow U denotes an upward direction of the vehicle 1 and an arrow D denotes a downward direction of the vehicle 1. When forward, rearward, leftward and rightward directions are referred to in the following description, they means forward, rearward, leftward and rightward directions as seen from a rider of the vehicle 1. An up-and-down direction means a vertical direction and also a substantially up-and-down direction which inclines from the vertical direction. A left-and-right direction means a horizontal direction and also a substantially left-and-right direction which inclines from the horizontal direction. A center in a vehicle's width direction means a central position of the vehicle 1 in the vehicle's width direction. A right in the vehicle's width direction means a direction from the center in the vehicle's width towards right. A left in the vehicle's width direction means a direction from the center in the vehicle's width towards left. An unloaded state of the vehicle means a state in which the vehicle 1 is in the upright state with front wheels neither steered nor caused to lean in such a state that no rider rides on and no fuel is put in the vehicle 1.

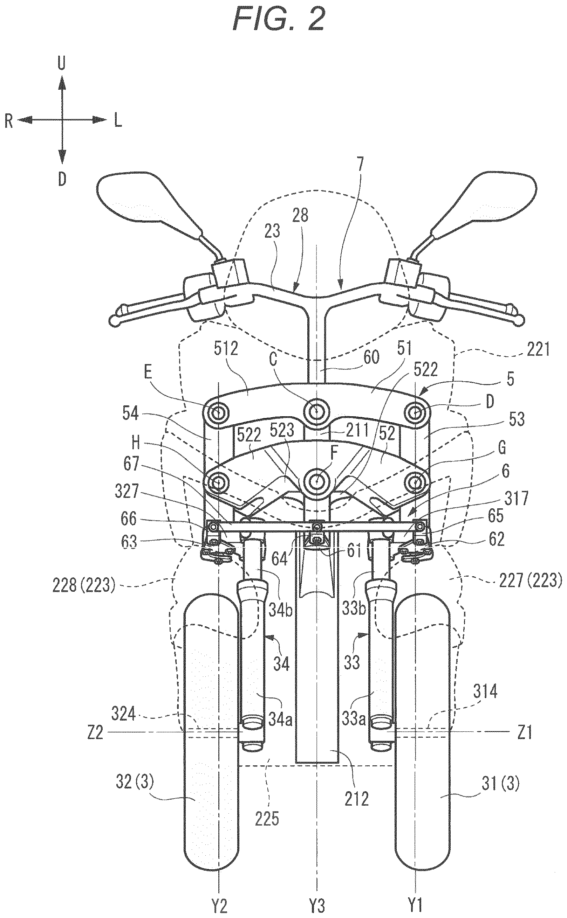

As shown in Fig. 1, the vehicle 1 includes a vehicle main body portion 2, a pair of left and right front wheels 3 (refer to Fig. 2), a rear wheel 4, a steering mechanism 7, and a link mechanism 5. The vehicle main body portion 2 includes a body frame 21, a body cover 22, a seat 24 and a power unit 25.

The body frame 21 has a headstock 211, a down frame 212, an under frame 214 and a rear frame 213. In Fig. 1, in the body frame 21, portions that are hidden by the body cover 22 are shown by broken lines. The body frame 21 supports the power unit 25, the seat 24 and the like. The power unit 25 has a drive source such as an engine, an electric motor or the like, a transmission and the like.

The headstock 211 is disposed at a front portion of the vehicle 1. The headstock 211 is disposed so as to be slant with respect to the vertical direction so that, in a side view of the vehicle 1, an upper portion thereof is positioned behind the lower portion thereof. The steering mechanism 7 and the link mechanism 5 are disposed around the headstock 211. A steering shaft 60 of the steering mechanism 7 is inserted into the headstock 211 so as to be turned therein. The headstock 211 supports the link mechanism 5. The headstock 211 which is part of the body frame 21 can lean to the right when the vehicle 1 turns to the right and can lean to the left when the vehicle 1 turns to the left.

The down frame 212 is connected to the headstock 211. The down frame 212 is disposed behind the headstock 211 and extends along the up-and-down direction. The under frame 214 is connected to a lower portion of the down frame 212. The under frame 214 extends rearwards from the lower portion of the down frame 212. The rear frame 213 is disposed behind the under frame 214 and extends obliquely rearwards and upwards. The rear frame 213 supports the seat 24, the power unit 25, a tail lamp and the like.

The body frame 21 is covered by the body cover 22. The body cover 22 has a front cover 221, a pair of left and right mudguards 223, a leg shield 225, a center cover 226 and a rear mudguard 224.

The front cover 221 is positioned ahead of the seat 24. The front cover 221 covers at least parts of the steering mechanism 7 and the link mechanism 5. The front cover 221 has a front portion 221a that is disposed ahead of the link mechanism 5. In a side view of the vehicle 1 in an unloaded state, the front portion 221a of the front cover 221 is provided above the front wheels 3. In the side view of the vehicle 1 in the unloaded state, the front portion 221a of the front cover 221 is disposed behind front ends of the front wheels 3. The leg shield 225 is disposed below the front cover 221 and ahead of the seat 24. The center cover 226 is disposed so as to cover the circumference of the rear frame 213.

The pair of left and right front mudguards 223 (see Fig. 2) is disposed directly below the front cover 221 and directly above the pair of front wheels 3. The rear mudguard 224 is disposed directly above a rear portion of the rear wheel 4.

The pair of left and right front wheels 3 is disposed below the headstock 211 and directly below the front cover 221 when the vehicle 1 is unloaded. The rear wheel 4 is disposed below the center cover 226 and the rear mudguard 224.

### <Steering Mechanism>

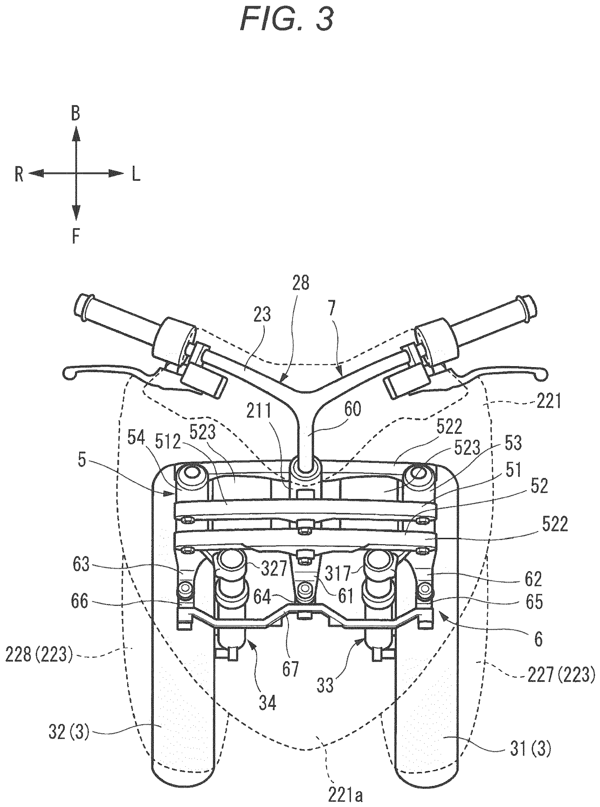

Fig. 2 is a front view of the front portion of the vehicle 1 shown in Fig. 1 when viewed from the front thereof. Fig. 3 is a plan view of the front portion of the vehicle 1 shown in Fig. 1 when viewed from thereabove. Figs. 2 and 3 show the front portion of the vehicle 1 as seen through the body cover 22.

As shown in Figs. 2 and 3, the steering mechanism 7 has a steering effort transmission mechanism 6, a suspension device, and the pair of left and right front wheels 3. The suspension device includes the link mechanism 5, a left shock absorber 33 and a right shock absorber 34. The suspension device supports a left front wheel 31 and a right front wheel 32 on the body frame 21. The suspension device supports the left front wheel 31 and the right front wheel 32 on the body frame 21 in such a state that the left front wheel 31 and the right front wheel 32 can be displaced in the up-and-down direction of the body frame 21 and that the left front wheel 31 and the right front wheel 32 are aligned in the left-and-right direction of the body frame 21.

The pair of right and left front wheels 3 includes the left front wheel 31 and the right front wheel 32. The left front wheel 31 and the right front wheel 32 are provided so as to be aligned in the left-and-right direction of the body frame 21. The left front wheel 31 and the right front wheel 32 are disposed symmetrically in the left-and-right direction with respect to a center of the vehicle in relation to the vehicle's width direction. In addition, of the pair of left and right front mudguards 223, a first front mudguard 227 is disposed directly above the left front wheel 31. Of the pair of left and right front mudguards 223, a second front mudguard 228 is disposed directly above the right wheel 32. The left front wheel 31 is supported by the left shock absorber 33. The right front wheel 32 is supported by the right shock absorber 34.

As shown in Fig. 1, the left front wheel 31 includes a left tire 311 and a left wheel 312 which supports the left tire 311. The right front wheel 32 includes a right tire 321 and a right wheel 322 which supports the right tire 321.

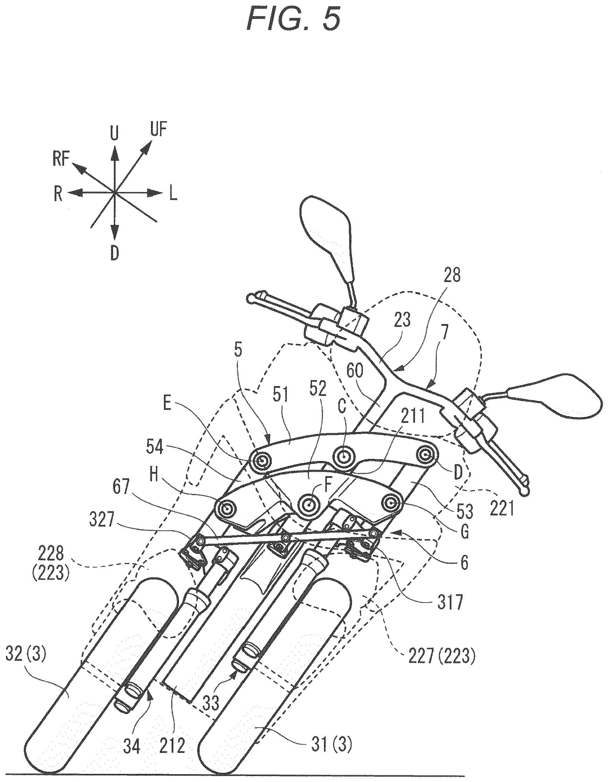

In this description, the "left-and-right direction of the body frame 21" denotes a direction that intersects at right angles or perpendicular to an axial direction of the headstock 211 when the vehicle 1 is viewed from the front thereof. An up-and-down direction of the body frame 21 denotes a direction which extends in an axial direction of the headstock 211 when the vehicle 1 is viewed from the front thereof. For an example, the up-and-down direction of the body frame 21 coincides with the axial direction of the headstock 211. As shown in Fig. 2, in such a state that the vehicle 1 is in an upright state, a rightward direction RF of the body frame 21 coincides with a rightward direction R in a horizontal direction when the vehicle 1 is viewed front the front thereof. Because of this, only the rightward direction R in the horizontal direction is shown in Fig. 2. As shown in Fig. 5, in such a state that the vehicle 1 leans relative to a road surface, when the vehicle 1 is viewed from the front thereof, the rightward direction RF of the body frame 21 does not coincide with the rightward direction R in the horizontal direction, and an upward direction UF of the body frame 21 does not coincide with an upward direction U in the vertical direction.

The left shock absorber 33 is a so-called telescopic shock absorber and dampens vibrations from the road surface. The left shock absorber 33 supports the left front wheel 31 at a lower portion thereof and absorbs an upward displacement of the left front wheel 31 in the up-and-down direction of the body frame 21. The left shock absorber 33 has a first lower-side portion 33a and a first upper-side portion 33b. The left front wheel 31 is supported on the first lower-side portion 33a. The first lower-side portion 33a extends in the up-and-down direction, and a left wheel axle 314 is supported on a lower end side of the first lower-side portion 33a. The left wheel axle 314 supports the left front wheel 31. The first upper-side portion 33b is disposed at an upper side of the first lower-side portion 33a in such a state that the first upper-side portion 33b is partially inserted into the first lower-side portion 33a. The first upper-side portion 33b can move relative to the first lower-side portion 33a in a direction in which the first lower-side portion 33a extends. An upper portion of the first upper-side portion 33b is fixed to a first bracket 317.

The first lower-side portion 33a and the first upper-side portion 33b make up two telescopic elements that are aligned parallel in the front-and-rear direction and are connected together. This configuration restricts the first upper-side portion 33b from turning relative to the first lower-side portion 33a.

The right shock absorber 34 is a so-called telescopic shock absorber and dampens vibrations from the road surface. The left shock absorber 34 supports the right front wheel 32 at a lower portion thereof and absorbs an upward displacement of the right front wheel 32 in the up-and-down direction of the body frame 21. The right shock absorber 34 has a second lower-side portion 34a and a second upper-side portion 34b. The right front wheel 32 is supported on the second lower-side portion 34a. The second lower-side portion 34a extends in the up-and-down direction, and a right wheel axle 324 is supported on a lower end side of the second lower-side portion 34a. The right wheel axle 324 supports the right front wheel 32. The second upper-side portion 34b is disposed at an upper side of the second lower-side portion 34a in such a state that the second upper-side portion 34b is partially inserted into the second lower-side portion 34a. The second upper-side portion 34b can move relative to the second lower-side portion 34a in a direction in which the second lower-side portion 34a extends. An upper portion of the second upper-side portion 34b is fixed to a second bracket 327.

The second lower-side portion 34a and the second upper-side portion 34b make up two telescopic elements that are aligned parallel in the front-and-rear direction and are connected together. This configuration restricts the second upper-side portion 34b from turning relative to the second lower-side portion 34a.

The steering effort transmission mechanism 6 is disposed above the left front wheel 31 and the right front wheel 32. The steering effort transmission mechanism 6 includes a steering member 28 as a member which inputs steering effort made by the rider. The steering member 28 has the steering shaft 60 and a handlebar 23 that is connected to an upper portion of the steering shaft 60. The steering shaft 60 is disposed so that the steering shaft 60 is partially inserted into the headstock 211 and extends substantially in the up-and-down direction. The steering shaft 60 can be turned relative to the headstock 211. The steering shaft 60 is turned in association with the rider turning the handlebar 23.

The steering effort transmission mechanism 6 has, in addition to the steering member 28, a first transmission plate 61, a second transmission plate 62, a third transmission plate 63, a first joint 64, a second joint 65, a third joint 66, a tie-rod 67, the first bracket 317 and the second bracket 327. The steering effort transmission mechanism 6 transmits the steering effort by which the rider operates the handlebar 23 to the first bracket 317 and the second bracket 327 by way of those constituent members.

The first transmission plate 61 is disposed at the center in the vehicle's width direction and is connected to the steering shaft 60 so as not to turn relative to the steering shaft 60. The first transmission plate 61 turns as the steering shaft 60 turns.

The second transmission plate 62 is connected to a left side portion 53 of the link mechanism 5, which will be described later, so as to turn relatively. The second transmission plate 62 is fixed to the first bracket 317. The second transfer plate 62 is disposed below the first bracket 317. The second transmission plate 62 is disposed on the left of the first transmission plate 61.

The third transmission plate 63 is connected to a right side portion 54 of the link mechanism 5, which will be described later, so as to turn relatively. The third transmission plate 63 is disposed laterally symmetrical with the second transmission plate 62 around the first transmission plate 61. The third transmission plate 63 is fixed to the second bracket 327. The third transfer plate 63 is positioned below the second bracket 327.

The first joint 64 is disposed at a front portion of the first transmission plate 61. The first joint 64 is supported by a turning shaft that extends in the up-and-down direction so as to turn relative to the first transmission plate 61. The second joint 65 is disposed at a front portion of the second transmission plate 62. The second joint 65 is supported by a turning shaft that extends in the up-and-down direction so as to turn relative to the second transmission plate 62. The third joint 66 is disposed at a front portion of the third transmission plate 63. The third joint 66 is supported by a turning shaft that extends in the up-and-down direction so as to turn relative to the third transmission plate 63. The first joint 64, the second joint 65, and the third joint 66 each have a shaft portion that extends in the front-and-rear diction at a front portion thereof.

The tie rod 67 extends in the vehicle's width direction. The tie-rod 67 is supported so as to turn relative to the shaft portions that extend in the front-and-rear direction at the front portions of the first joint 64, the second joint 65 and the third joint 66.

The steering effort transmission mechanism 6 that is configured in the way described above transmits the steering effort transmitted from the steering member 28 to the tie rod 67 by way of the first transmission plate 61 and the first joint 64. This causes the tie rod 67 to be displaced either leftwards or rightwards. The steering effort transmitted to the tie rod 67 is transmitted from the tie rod 67 to the first bracket 317 by way of the second transmission plate 62 and the second joint 65 and is also transmitted from the tie rod 67 to the second bracket 327 by way of the third transmission plate 63 and the third joint 66. As a result, the first bracket 317 and the second bracket 327 are turned in the direction in which the tie-rod 67 is displaced.

### <Link Mechanism>

In this embodiment, the link mechanism 5 adopts a four-joint parallel link system (also, called a parallelogram link) . The link mechanism 5 is part of the suspension device.

The link mechanism 5 is disposed below the handlebar 23. The link mechanism 5 is connected to the headstock 211 of the body frame 21. The link mechanism 5 includes an upper cross portion 51, a lower cross portion 52, the left side portion 53 and the right side portion 54 as a configuration which enables the vehicle 1 to lean. Additionally, the link mechanism 5 includes the first bracket 317 and the left shock absorber 33 as a configuration that is connected to a lower portion of the left side portion 53 so as to lean together with the left side portion 53. Further, the link mechanism 5 includes the second bracket 327 and the right shock absorber 34 as a configuration that is connected to a lower portion of the right side portion 54 so as to lean together with the right side portion 54.

The right side portion 54 supports an upper portion of the right shock absorber 34 so as to turn about a right steering axis Y2 that extends in the up-and-down direction of the body frame 21. The left side portion 53 supports an upper portion of the left shock absorber 33 so as to turn a left steering axis Y1 that is parallel to the right steering axis Y2.

The upper cross member 51 supports:
at a right end portion thereof an upper portion of the right side portion 54 so as to turn about an upper right axis E that extends in the front-and-rear direction of the body frame 21 and
supports at a left end portion thereof an upper portion of the left side portion 53 so as to turn about an upper left axis D that is parallel to the upper right axis E and
   is supported at a middle portion thereof on the body frame 21 so as to turn about an upper middle axis C that is parallel to the upper right axis E and the upper left axis D.

The lower cross member 52 supports
at a right end portion thereof a lower portion of the right side portion 54 so as to turn about a lower right axis H that is parallel to the upper right axis E and
supports at a left end portion thereof a lower portion of the left side portion 53 so as to turn about a lower left axis G that is parallel to the upper left axis D and
is supported at a middle portion thereof on the body frame 21 so as to turn about a lower middle axis F that is parallel to the upper middle axis C.

The upper cross portion 51 includes a plate-shaped member 512 which is provided in front of the headstock 211 and extends in the vehicle's width direction. The plate-shaped member 512 is supported on the headstock 211 by a supporting portion and can turn relative to the headstock 211 about the upper middle axis C that extends substantially in the front-and-rear direction.

A left end of the upper cross portion 51 is connected to the left side portion 53 by a supporting portion. The upper cross portion 51 can turn relative to the left side portion 53 about the upper left axis D that extends substantially in the front-and-rear direction. A right end of the upper cross portion 51 is connected to the right side portion 54 by a connecting portion. The upper cross portion 51 can turn relative to the right side portion 54 about the upper right axis E that extends substantially in the front-and-rear direction.

The lower cross portion 52 is supported on the headstock 211 by a supporting portion and can turn about the lower middle axis F that extends substantially in the front-and-rear direction. The lower cross portion 52 is disposed below the upper cross portion 51. The lower cross portion 52 has substantially the same widthwise length as that of the upper cross portion 51 in relation to the vehicle's width direction and is disposed parallel to the upper cross portion 51.

The lower cross portion 52 includes a pair of plate-shaped members 522, 522 that extend in the vehicle's width direction. The pair of plate-shaped members 522, 522 is disposed so as to hold the headstock 211 therebetween in the front-and-rear direction. The pair of plate-shaped members 522, 522 is connected integrally to each other by a middle portion 523. The middle portion 523 may be integral with or separated from the pair of the plate-shaped members 522, 522. A left end of the lower cross portion 52 is connected to the left side portion 53 by a supporting portion. The lower cross portion 52 can turn relative to the left side portion 53 about the lower left axis G that extends substantially in the front-and-rear direction. A right end of the lower cross portion 52 is connected to the right side portion 54 by a supporting portion. The lower cross portion 52 can turn relative to the right side portion 54 about the lower right axis H that extends substantially in the front-and-rear direction.

The left side portion 53 is disposed on the left of the headstock 211 and extends in parallel with a direction in which the headstock 211 extends. The left side portion 53 is disposed directly above the left front wheel 31 and above the left shock absorber 33. The left side portion 53 is connected to the first bracket 317 at the lower portion thereof and is attached to the first bracket 317 so as to turn about the left steering axis Y1.

The right side portion 54 is disposed on the right of the headstock 211 and extends in the direction in which the headstock 211 extends. The right side portion 54 is disposed directly above the right front wheel 32 and above the right shock absorber 34. The right side portion 54 is connected to the second bracket 327 at the lower portion thereof and is attached to the second bracket 327 so as to turn about the right steering axis Y2.

In this way, the upper cross portion 51, the lower cross portion 52, the left side portion 53 and the right side portion 54 are connected together in such a posture that the upper cross portion 51 and the lower cross portion 52 become parallel to each other and that the left side portion 53 and the right side portion 54 become parallel to each other.

### <Steering Operation>

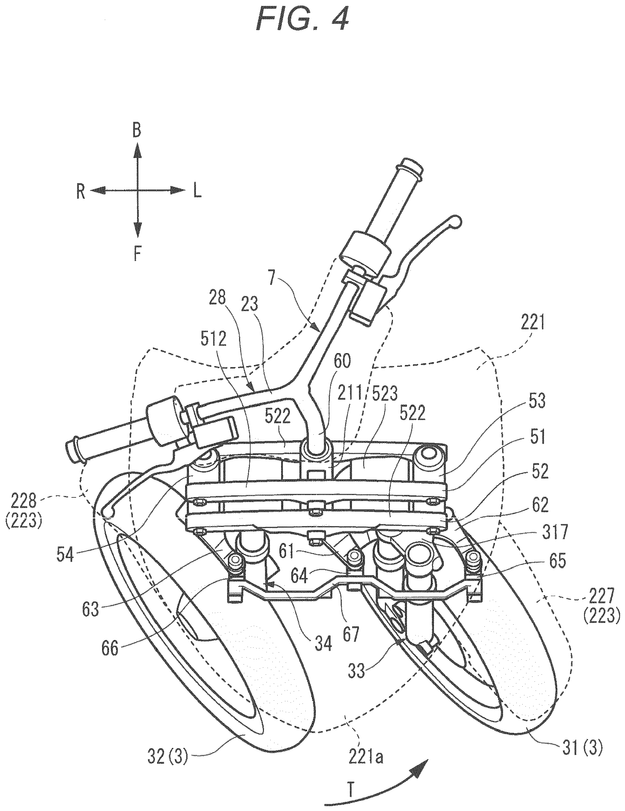

Fig. 4 is a plan view of the front portion of the vehicle 1 when the vehicle 1 is steered to be turned, depicting the steering operation of the vehicle 1.

As shown in Fig. 4, when the handlebar 23 is turned left or right, the steering effort transmission mechanism 6 of the steering mechanism 7 is activated to thereby perform a steering operation. When the steering shaft 60 turns as a result of the handlebar 23 being turned, the first transmission plate 61 turns as the steering shaft 60 turns.

For example, when the steering shaft 60 turns in a direction indicated by an arrow T in Fig. 4, the tie-rod 67 moves leftwards and rearwards in association with the turning of the first transmission plate 61. As this occurs, the first transmission plate 61 is allowed to turn relative to the first joint 64 by the turning shaft of the first joint 64 that extends substantially in the up-and-down direction, and the tie-rod 67 moves leftwards and rearwards while maintaining its posture. The second transmission plate 62 and the third transmission plate 63 turn in the direction indicated by the arrow T about the left side portion 53 and the right side portion 54. respectively, as the tie-rod 67 moves leftwards and rearwards. As this occurs, the second transmission plate 62 turns relative to the second joint 65 about the rotating shaft of the second joint 65 that extends in the up-and-down direction, and the third transmission plate 63 turns relative to the third joint 66 about the rotating shaft of the third joint 66 that extends in the up-and-down direction.

When the second transmission plate 62 and the third transmission plate 63 turn in the direction indicated by the arrow T, the first bracket 317 and the second bracket 327 turn in the direction indicated by the arrow T. When the first bracket 317 and the second bracket 327 turn in the direction indicated by the arrow T, the left front wheel 31 turns about the left steering axis Y1 (refer to Fig. 2) via the left shock absorber 33, and the right front wheel 32 turns about the right steering axis Y2 (refer to Fig. 2) via the right shock absorber 34.

### <Leaning Operation>

Fig. 5 is a front view of the front portion of the vehicle 1 when the vehicle 1 is steered to be turned, depicting a leaning operation of the vehicle 1.

As shown in Fig. 5, the vehicle 1 leans to the left or right as the link mechanism 5 operates. The operation of the link mechanism 5 means that the individual members (the upper cross portion 51, the lower cross portion 52, the left side portion 53 and the right side portion 54) that activate a leaning operation in the link mechanism 5 turn relatively about their connecting points as axes so as to change the shape of the link mechanism 5.

In the link mechanism 5 of this embodiment, for example, the upper cross portion 51, the lower cross portion 52, the left side portion 53 and the right side portion 54 which are disposed so as to form substantially a rectangular shape when viewed from the front with the vehicle 1 being in the upright state turn to change the rectangular shape that they form substantially into a parallelogram shape in such a state that the vehicle leans. The link mechanism 5 performs a leaning operation in association with the relative turning operation of the upper cross portion 51, the lower cross portion 52, the left side portion 53 and the right side portion 54 to thereby cause the left front wheel 31 and the right front wheel 32 to lean accordingly.

For an example, when the rider causes the vehicle 1 to lean to the left, the headstock 211 leans relative to the vertical direction. When the headstock 211 leans, the upper cross portion 51 turns relative to the headstock 211 about the upper middle axis C, and the lower cross portion 52 turns relative to the headstock 211 about the lower middle axis F. Then, the upper cross portion 51 moves to the left than the lower cross portion 52 and the left side portion 53 and the right side portion 54 lean relative to the vertical direction while kept parallel to the headstock 211. The left side portion 53 and the right side portion 54 turn relative to the upper cross portion 51 and the lower cross portion 52 when the left side portion 53 and the right side portion 54 lean. Consequently, when the vehicle 1 is caused to lean, the left front wheel 31 and the right front wheel 32 that are supported on the left side portion 53 and the right side portion 54, respectively, lean while kept parallel to the headstock 211 relative to the vertical direction as the left side portion 53 and the right side portion 54 lean.

In addition, during the leaning operation, the tie-rod 67 turns relative to the shaft portions of the first joint 64, the second joint 65 and the third joint 66 that extend in the front-and-rear direction. This allows the tie rod 67 to maintain its parallel posture to the upper cross portion 51 and the second cross portion 52 even though the vehicle 1 leans.

### <Steer operation and Lean operation>

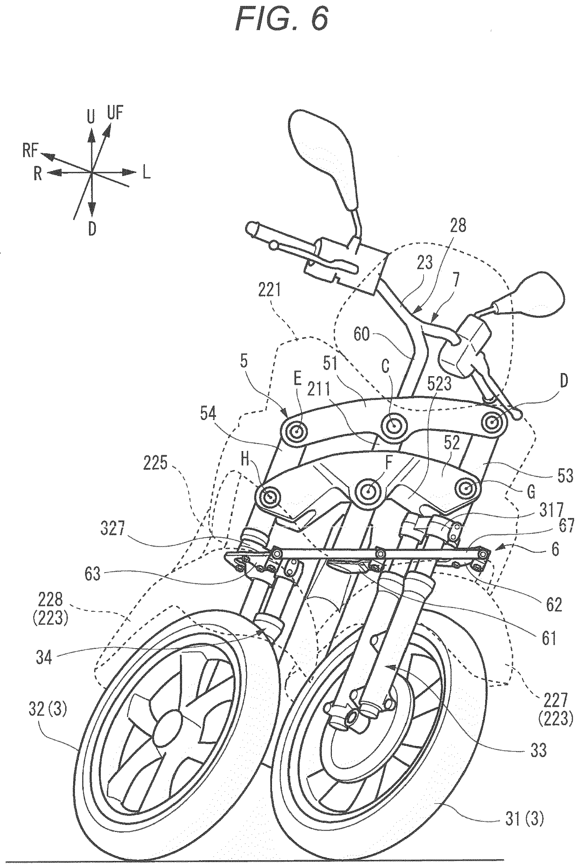

Fig. 6 is a front view of the front portion of the vehicle 1 in such a state that the vehicle 1 is steered and caused to lean.

Fig. 6 shows a state that the vehicle 1 is steered to the left and leans to the left. When the vehicle 1 operates as illustrated in Fig. 6, the directions of the left front wheel 31 and the right front wheel 32 are changed by the steering operation, and both the left front wheel 31 and the right front wheel 32 are caused to lean together with the body frame 21 by the leaning operation. In this state, the upper cross portion 51, the lower cross portion 52, the left side portion 53 and the right side portion 54 of the link mechanism 5 are turned to change the shape that they form substantially into a parallelogram, whereby the tie-rod 67 moves leftwards or rightwards, that is, in a direction in which the vehicle 1 is steered (leftwards in Fig. 6) and rearwards.

### <Telescopic Elements>

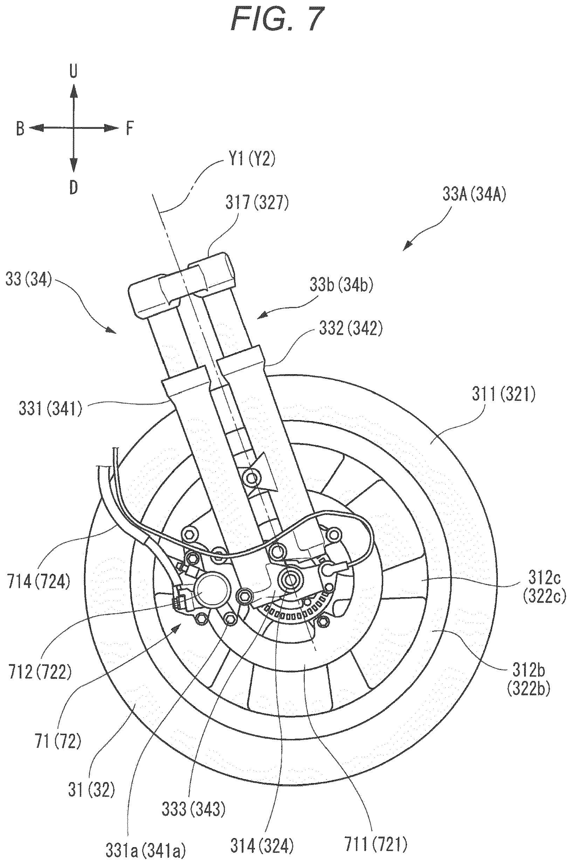

Fig. 7 is a side view of the left front wheel 31 as viewed from the right front wheel 32. In Fig. 7, only the left front wheel 31 and members provided therearound are shown, and as to the right front wheel 32 and members provided therearound, only reference numerals denoting the right front wheel 32 and members provided therearound are given, and the illustration thereof is omitted here. In this embodiment, the shapes and positional relationship of the right front wheel 32 and the members that are disposed therearound are symmetrical laterally with the shapes and positional relationship of the left front wheel 31 and the members that are disposed therearound. Thus, as matter of convenience, the right front wheel 32 and the members provided therearound will be described by reference to Fig. 7.

The suspension device has a left telescopic element 33A which supports the left front wheel 31 so as to be displaced rectilinearly and a right telescopic element 34A which supports the right front wheel 32 so as to be displaced rectilinearly.

As shown in Fig. 7, the left shock absorber 33, which is part of the suspension device, includes the left telescopic element 33A. The left telescopic element 33A includes a left rear telescopic element 331, a left front telescopic element 332, the first bracket 317 and a left wheel axle support portion 333.

The left rear telescopic element 331 and the left front telescopic element 332 are connected together while being aligned in the front-and-rear direction. A lower portion of the left rear telescopic element 331 and a lower portion of the left front telescopic element 332 make up a first lower portion 33a. An upper portion of the left rear telescopic element 331 and an upper portion of the left front telescopic element 332 make up a first upper portion 33b. The left rear telescopic element 331 and the left front telescopic element 332 are disposed further rightwards of the body frame 21 than the left front wheel 31.

The left rear telescopic element 331 has an extending and contracting construction in which the left rear telescopic element 331 extends and contracts along the direction of the left steering axis Y1. An elastic member (not shown) such as a spring and a damping member (not shown) such as oil or the like are provided in an interior of the left rear telescopic element 331. The left rear telescopic element 331 has a function to absorb vibration or impact from the left front wheel 31.

The left front telescopic element 332 is disposed ahead of the left rear telescopic element 331. The left front telescopic element 332 has an extending and contracting construction in which the left front telescopic element 332 extends and contracts along the direction of the left steering axis Y1.

Upper portions of the left rear telescopic element 331 and the left front telescopic element 332 are connected together by the first bracket 317. A lower end portion of the left front telescopic element 332 is fixedly connected to the vicinity of a lower end portion of the left rear telescopic element 331.

The left front telescopic element 332 is shorter than the left rear telescopic element 331 in the direction of the left steering axis Y1. A left wheel axle supporting portion 333 that supports rotatably the left wheel axle 314 is disposed below the lower end portion of the left front telescopic element 332. The left wheel axle supporting portion 333 is connected to the left rear telescopic element 331.

As shown in Fig. 7, the right shock absorber 34, which is part of the suspension device, includes the right telescopic element 34A. The right telescopic element 34A includes a right rear telescopic element 341, a right front telescopic element 342, the second bracket 327 and a right wheel axle support portion 343.

The right rear telescopic element 341 and the right front telescopic element 342 are connected together while being aligned in the front-and-rear direction. A lower portion of the right rear telescopic element 341 and a lower portion of the left front telescopic element 342 make up a second lower portion 34a. An upper portion of the right rear telescopic element 341 and an upper portion of the right front telescopic element 342 make up a second upper portion 34b. The right rear telescopic element 341 and the right front telescopic element 342 are disposed further leftwards of the body frame 21 than the right front wheel 32.

The right rear telescopic element 341 has an extending and contracting construction in which the right rear telescopic element 341 extends and contracts along the direction of the right steering axis Y2. An elastic member (not shown) such as a spring and a damping member (not shown) such as oil or the like are provided in an interior of the right rear telescopic element 341. The right rear telescopic element 341 has a function to absorb vibration or impact from the right front wheel 32.

The right front telescopic element 342 is disposed ahead of the right rear telescopic element 341. The right front telescopic element 342 has an extending and contracting construction in which the right front telescopic element 342 extends and contracts along the direction of the right steering axis Y2.

Upper portions of the right rear telescopic element 341 and the right front telescopic element 342 are connected together by the second bracket 327. A lower end portion of the right front telescopic element 342 is fixedly connected to the vicinity of a lower end portion of the right rear telescopic element 341.

The right front telescopic element 342 is shorter than the right rear telescopic element 341 in the direction of the right steering axis Y2. A right wheel axle supporting portion 343 that supports rotatably the right wheel axle 324 is disposed below the lower end portion of the right front telescopic element 342. The right wheel axle supporting portion 343 is connected to the right rear telescopic element 341.

### <Disc Brake>

As shown in Fig. 7, a left disc brake 71 (an example of a left brake device) is provided on the left front wheel 31. The left disc brake 71 applies brake to the left front wheel 31. The left disc brake 71 has a left brake disc 711 that is provided on the left front wheel 31 and a left brake caliper 712 that applies brake to the rotation of the left brake disc 711.

The left brake disc 711 is formed into a ring shape which is centered at the left wheel axle 314. The left brake disc 711 is fixed to the left front wheel 31.

The left brake caliper 712 is provided on the left shock absorber 33. The left brake caliper 712 is fixed to the end portion of the left rear telescopic element 331 of the left shock absorber 33. The left brake caliper 712 is provided at a rear portion of the end portion of the left rear telescopic element 331 of the left shock absorber 33. A brake hose 714 is connected to the left brake caliper 712. A brake fluid is fed into the left brake caliper 712 by way of the brake hose 714 whereby a hydraulic pressure is imparted to the left brake caliper 712. The left brake caliper 712 includes a left-right brake pad which is positioned directly on the right of the left brake disc 711 and a left-left brake pad which is positioned directly on the left of the left brake disc 711. As a result of the hydraulic pressure being applied to the left brake caliper 712, the left brake caliper 712 presses the left-right brake pad and the left-left brake pad against both surfaces of the left brake disc 711. The left brake caliper 712 holds the left disc brake 711 by the left-right brake pad and the left-left brake pad therebetween to thereby apply brake to the left disc brake 711 that is rotating.

A right disc brake 72 is provided on the right front wheel 32. The right disc brake 72 applies brake to the right front wheel 32. The right disc brake 72 has a right brake disc 721 that is provided on the right front wheel 32 and a right brake caliper 722 that applies brake to the rotation of the right brake disc 721.

The right brake disc 721 is formed into a ring shape which is centered at the right wheel axle 324. The right brake disc 721 is fixed to the right front wheel 32.

The right brake caliper 722 is provided on the right shock absorber 34. The right brake caliper 722 is fixed to the end portion of the right rear telescopic element 341 of the right shock absorber 34. The right brake caliper 722 is fixed to the end portion of the right rear telescopic element 341 of the right shock absorber 34. A brake hose 774 is connected to the right brake caliper 722. A brake fluid is fed into the right brake caliper 722 by way of the brake hose 724 whereby a hydraulic pressure is imparted to the right brake caliper 722. The right brake caliper 722 includes a right-right brake pad which is positioned directly on the right of the right brake disc 721 and a right-left brake pad which is positioned directly on the left of the right brake disc 721. As a result of the hydraulic pressure being applied to the right brake caliper 722, the right brake caliper 722 presses the right-right brake pad and the right-left brake pad against both surfaces of the right brake disc 721. The right brake caliper 722 holds the right brake disc 721 to thereby apply brake to the right brake disc 721 which is rotating.

### <Front Wheel Supporting Construction>

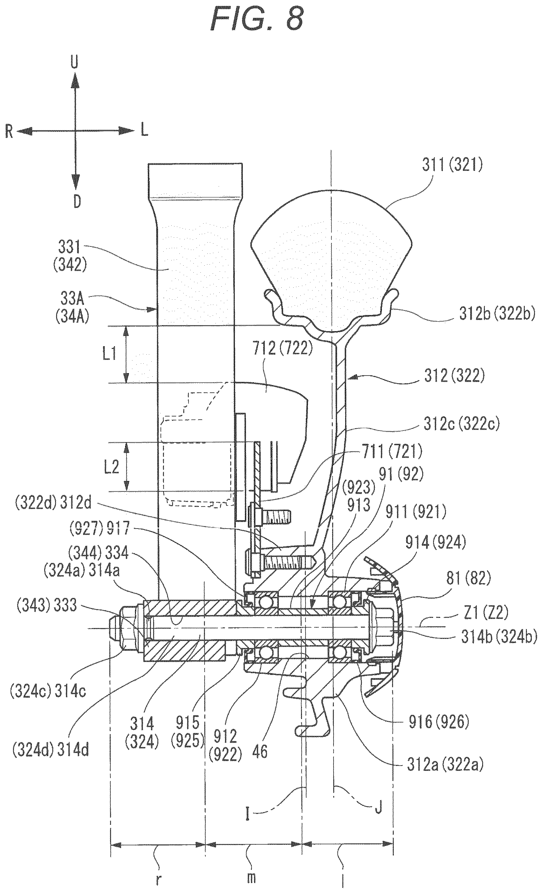

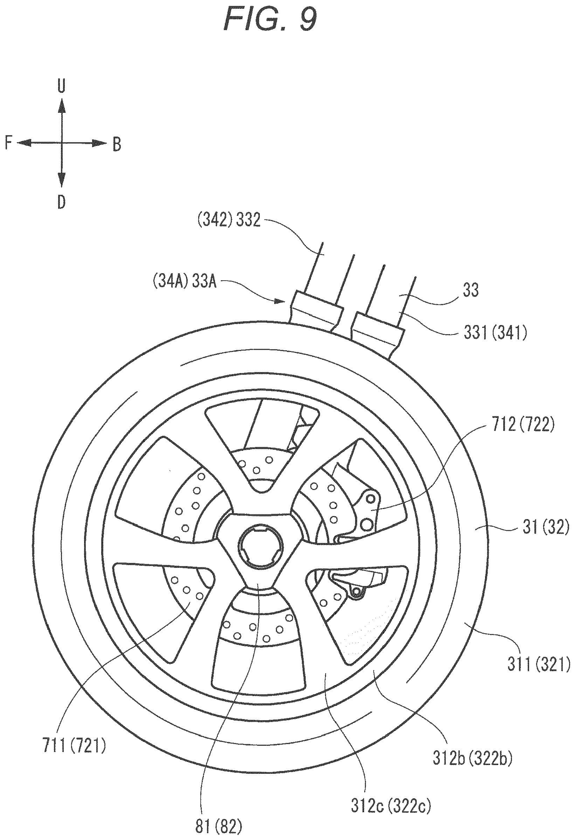

Next, a supporting construction of the front wheel 3 of the vehicle 1 will be described in detail by using Figs. 8 and 9. Fig. 8 is a sectional view showing a supporting construction of the left front wheel 31. Fig. 9 is a left side view of the left front wheel 31.

Incidentally, the following types (1) to (3) are considered as the supporting construction of the front wheel 3.
(1) A type in which a wheel of wheels is attached to a hub unit which is supported rotatably at a lower portion of a shock absorber.
(2) A type in which a support shaft which penetrates a wheel of wheels in a left-and-right direction is supported at both sides thereof.
(3) A type in which a support shaft which projects to one of left and right sides of a wheel of wheels is supported at one side thereof.

In designing a front wheel supporting construction, the inventors have compared the types (1) to (3) described above with respect to a dimension of the vehicle on the rotating shaft of the front wheel and an unsprung weight of the vehicle when the vehicle is travelling straight ahead.

### (As to Dimension of the Vehicle on the Rotating Shaft of the Front wheel)

As to the type (2), since the members which support the support shaft are disposed on the left and right of the wheel, the dimension of the vehicle on the rotating shaft of the front wheel when the vehicle is travelling straight ahead tends to become the greatest. Next, as to the type (1), the shock absorber, the hub unit and the wheel are disposed on the rotating shaft of the front wheel in this order from the inside towards the outside in the vehicle's width direction. In contrast with this, in the type (3), the shock absorber and the wheel are disposed in this order from the inside towards the outside in the vehicle's width direction. Since the type (3) does not have a hub unit, the dimension in question can be made smaller than that in the type (1) . Namely, the dimension of the vehicle 1 on the rotating shaft of the front wheel increases in the order of (3), (1), (2).

### (As to Unsprung Weight)

In the type (2), the support member is supported by the support portions which are provided on both the sides of the wheel. Since the force exerted on the wheel can be supported equally by the individual support portions, the individual support portions can be formed small. Because of this, the unsprung weight can be the smallest with the type (2) . Compared with the type (2), in the types (1) and (3), the support member is supported only at one side, relatively great rigidity is required of the support portion. Because of this, the support portion becomes large in size, and the unsprung weight tends to become great.

Additionally, the type (1) includes the hub unit which is a large metallic member. In contrast with this, the type (3) includes no hub unit, and therefore, the unsprung weight can be reduced, compared with the type (1).

In this way, the unsprung weight increases in the order of (2), (3), (1).

Then, the inventors have come to a conclusion that the front wheel supporting construction of the type (3) is generally superior in realizing the vehicle in which the dimension of the vehicle 1 on the rotating shaft of the front wheel when the vehicle is travelling straight ahead is small and the unsprung weight is also small. The vehicle 1 described in Non-Patent Literature 1 and Patent Literature 1 corresponds to the type (1). As has been described before, with the type (1), particularly the unsprung weight tends to be great, and the steering feel tends to become heavy.

Then, in the vehicle 1 according to the embodiment of the invention which will be described next, as with the type (3), a supporting construction of the front wheel 3 is considered in which the left wheel axle 314 which extends to the right from the left front wheel 31 is supported at a lower portion of the left shock absorber 33 and the right fastening bolt which extends to the left from the right front wheel 32 is supported at a lower portion of the right shock absorber 34.

The left front wheel 31 includes a left tire 311 and a left wheel 312 which supports the left tire 311 on an outer circumference thereof. Similarly, the right front wheel 32 includes a right tire 321 and a right wheel 322 which supports the right tire 321 on an outer circumference thereof.

The left wheel 312 is supported rotatably on the left wheel axle 314 which is provided at the lower portion of the left shock absorber 33 which is provided below the link mechanism 5. It is noted that since the supporting constructions of the front wheels 3 are laterally symmetrical with each other, in the following description, a supporting construction of the left front wheel 31 will be described, and a supporting construction of the right front wheel 32 will be omitted.

A fixing hole portion 334 is provided at the lower portion of the left shock absorber 33, and this fixing hole portion 334 extends in the left-and-right direction. Additionally, a left nut element 314c is fixed to the left shock absorber 33 on the right of the fixing hole portion 334. A threaded hole in the left nut element 314c is coaxial with the fixing hole portion 334. The left wheel axle 314 penetrates the left axle support portion 333 of the left telescopic element 33A and the left bearing portion 91.

### (Wheel Axle)

The left wheel axle 314 is inserted through the fixing hole portion 334 in the left axle support portion 333 of the left shock absorber 33. The left wheel axle 314 (an example of a left shaft member) supports the left wheel 312 at the lower portion of the left shock absorber 33 via the left bearing portion 91. The left wheel axle 314 is inserted into the fixing hole portion 334 in the left shock absorber 33 and a wheel hole portion 46 in the left wheel 312. The left wheel axle 314 is positioned in a rotating center of the left wheel 312.

The left wheel axle 314 has a left bolt element 314d and the left nut element 314c. The left bolt element 314d has a threaded portion 314a which is provided at a right portion of the left wheel axle 314 and a head portion 314b which is provided at a left portion of the left wheel axle 314.

The right portion of the left wheel axle 314 penetrates the fixing hole portion 334. A right end portion of the left wheel axle 314 projects to the right from the fixing hole portion 334. The threaded portion 314a at the right end portion of the left wheel axle 314 is fastened to the left nut element 314c which is provided at the lower portion of the left shock absorber 33.

### (Wheel)

The left wheel 312 includes a left hub portion 312a which is positioned in a radial center thereof, a left rim portion 312b which is positioned radially outwards, a left spoke portion 312c which connects the left hub portion 312a and the left rim portion 312b and the left bearing portion 91. The left tire 311 is attached to an outer circumferential surface of the left rim portion 312b. The wheel hole portion 46 which extends in the direction of a rotating axis is provided in the left hub portion 312a of the left wheel 312. A left-hand side opening of the wheel hole portion 46 can be closed by the left cap 81 which is attached to the left hub portion 312a.

A left brake disc 711 is fixed to the left wheel 312 so as not to rotate at the left hub portion 312a of the left wheel 312. The left brake disc 711 rotates together with the left wheel 312. The left brake disc 711 is provided in a position which is spaced away towards the left shock absorber 33 from the left wheel 312.

A left brake caliper 712 is fixed to the lower portion of the left shock absorber 33. Brake pads of the left brake caliper 712 hold the left brake disc 711 therebetween, whereby the left brake caliper 712 applies a braking force to the left front wheel 31.

### (Left Bearing Portion)

The left bearing portion 91 is provided in the wheel hole portion 46 in the left wheel 312. The left bearing portion 91 is provided between the head portion 314b of the left wheel axle 314 and the left shock absorber 33 in relation to the left-and-right direction. The left bearing portion 91 includes a first left bearing 911, a second left bearing 912, a first left collar 913, a second left collar 914 and a third left collar 915. The first left bearing 911 and the second left bearing 912 are disposed to be aligned in the left-and-right direction.

The first left bearing 911 and the second left bearing 912 each include an inner ring, an outer ring, and rolling elements. The inner ring is attached to the outer circumferential surface of the left wheel axle 314. The outer ring is attached to an inner circumferential surface of the wheel hole portion 46 in the left wheel 312. Grooves extending in a circumferential direction are provided in surfaces of the inner ring and the outer ring which face each other. The rolling elements can roll along the grooves provided between the inner ring and the outer ring. The rolling elements may be spherical elements as shown in the figure, or cylindrical or circular conical elements can also be adopted as the rolling elements. A center I between the first left bearing 911 and the second left bearing 912 in relation to the left-and-right direction is offset towards the left shock absorber 33 from a left-and-right center J of the left rim portion 322b.

The first left collar 913, the second left collar 914 and the third left collar 915 are cylindrical members. The left wheel axle 314 is passed through interiors of the first left collar 913, the second left collar 914 and the third left collar 915. The first left collar 913 is disposed between the first left bearing 911 and the second left bearing 912. The second left collar 914 is disposed between the first left bearing 911 and the head portion 314b of the left wheel axle 314. The third left collar 915 is disposed between the second left bearing 912 and the left shock absorber 33.

### (Seal)

A first left seal 916 is provided on the left of the first left bearing 911. The first left seal 916 is fixed to the inner circumferential surface of the wheel hole portion 46 in the left wheel 312. The first left seal 916 covers a gap defined between the inner ring and the outer ring of the first left bearing 911. The first left seal 916 prevents water and mud from entering an interior of the first left bearing 911.

Similarly, a second left seal 917 is provided on the right of the second left bearing 912. The second left seal 917 is fixed to an inner circumferential surface of the fixing hole portion 334 in the left wheel 312. The second left seal 917 covers a gap defined between the inner ring and the outer ring of the second left bearing 912. The second left seal 917 prevents water and mud from entering an interior of the second left bearing 912.

The first left seal 916 and the second left seal 917 can be made of a synthetic rubber or the like.

### (Cap)

As shown, a central portion of the left wheel 312 extends leftwards to a position where the central portion faces at least part of a side surface of the head portion 314b of the left wheel axle 314. This configuration prevents mud and stone from colliding with the side surface of the head portion 314b of the left wheel axle 314. Additionally, since the first left bearing 911 is disposed in the position which lies far away from the left-hand side opening of the wheel hole portion 46, it is difficult for water and mud to enter the interior of the first left bearing 911. Further, since the left-hand side opening of the wheel hole portion 46 is closed by the left cap 81, it is possible to prevent water and mud from entering the interior of the first left bearing 911 effectively.

As shown in Fig. 9, the left cap 81 has a size which is sufficient to cover the opening of the wheel hole portion 46. When seen from a left of the vehicle 1, an outer circumferential edge of the left cap 81 is positioned further inwards than an inner circumferential edge of the left brake disc 711. By adopting this configuration, a side surface of the left brake disc 711 becomes visible through the left wheel 312, enhancing the design properties of the vehicle 1. The design properties of the vehicle 1 are enhanced while protecting the head portion 314b of the left wheel axle 314 which is connected to the left shock absorber 33 of the left front wheel 31 by the left cap 81. Additionally, since the left cap 81 which projects the head portion 314b of the left wheel axle 314 is not enlarged in size, the unsprung weight becomes light.

### (How to Remove the Front Wheel)

In the supporting construction of the front wheel 3 which is configured in the way described above, in removing the left front wheel 31 from the vehicle 1, the meshing engagement of the threaded portion 314a of the left wheel axle 314 with the left nut element 314c is released so as to move the left bolt element 314d to the left, and the left bolt element 314d is dislocated from the fixing hole portion 334. Then, the left bolt element 314d is removed from the vehicle 1 together with the left bearing portion 91 and the left front wheel 31. In the supporting construction of the front wheel 3 described above, since the left bearing portion 91 is supported in the left wheel 312, the left bearing portion 91 is removed from the vehicle 1 together with the left wheel 312.

The left brake caliper 712 is moved to a position where the left brake caliper 712 does not interfere with the left brake disc 711 so that the left brake disc 711 does not interfere with the left brake caliper 712 before the left front wheel 31 is removed from the vehicle 1. A gap is provided between the left brake caliper 712 and the left rim portion 312b of the left wheel 312 to permit the movement of the left brake caliper 712 in the way described above. A dimension L1 of the gap in the radial direction of the left brake disc 711 is set to be greater than a radial length L2 of a portion where the left brake disc 711 overlaps the left brake caliper 712 as seen from the direction of the left wheel axis Z1 (L1>L2).

In the description made above, while the supporting construction of the left front wheel 31 which is positioned in the left portion of the vehicle 1, a supporting construction of the right front wheel 32 which is positioned in the right portion of the vehicle 1 is laterally symmetrical with the supporting construction of the left front wheel 31.

Namely, the right front wheel 32 has a right wheel 322 including a right bearing portion 92. Additionally, the vehicle 1 has a right wheel axle 324 which supports the right wheel 322 to the lower portion of the right shock absorber 34 via the right bearing portion 92. The right wheel axle 324 is positioned in a rotating center Z2 of the right wheel 322 and is fastened to the lower portion of the right shock absorber 34 at a left portion thereof. The right wheel 322 is supported at a right portion of the right wheel axle 324 so as to rotate thereabout.

Additionally, in the right bearing portion 92, a left-and-right center I between a plurality of bearings 921, 922 is offset to the left from a left-and-right center J of the right rim portion 322b. A right cap 82 is attached to the right wheel 322 in such a way as to cover a head portion 324c which is provided at a right end portion of the right wheel axle 324.

### (Advantages)

The inventors have studied in detail the supporting construction of the right front wheel and the left front wheel of the vehicles described in Patent Literature 2 and Non-Patent Literature 1. The vehicles of Patent Literature 2 and Non-Patent Literature 1 adopt a bottom link suspension device. The right front wheel and the left front wheel are each supported on a swing lever member which is supported so as to swing at the lower portion of the suspension device via a hub device. The rigidity of the supporting construction is ensured by adopting the construction described above.

Then, the inventors have studied to change the shape of the suspension device. Specifically, the inventors have studied a construction for supporting the right front wheel 32 and the left front wheel 31 in a cantilever state at lower portions of the telescopic elements without using a swing lever. Namely, the inventors have studied the construction for supporting the right front wheel 32 and the left front wheel 31 in the cantilever state by making use of the rigidity of the telescopic elements. More specifically, the following construction has been studied. The suspension device supports the right wheel 322 in a cantilever state so as to turn about the right steering axis Y2 which extends in the perpendicular direction to the right wheel axis Z2 and to be displaced in the up-and-down direction relative to the body frame 21 at the lower portion of the right telescopic element 34A by the right shaft member 324 which penetrates a right axle support portion 343 of the right telescopic element 34A and the right bearing portion 92. In addition, the suspension device supports the left wheel 312 in a cantilever state so as to turn about the left steering axis Y1 which extends in the perpendicular direction to the left wheel axis Z1 and to be displaced in the up-and-down direction relative to the body frame 21 at the lower portion of the left telescopic element 33A by the left shaft member 314 which penetrates the left axle support portion 333 of the left telescopic element 33A and the left bearing portion 91.

According to the vehicle 1 of the invention, since the right wheel 322 and the left wheel 312 are cantilevered, compared with the construction in which the right wheel 322 and the left wheel 312 are supported on both the sides thereof, the width of the vehicle 1 can be reduced in relation to the left-and-right direction of the body frame 21.

Additionally, the right wheel 322 is supported in the cantilever state at the lower portion of the right telescopic element 34A and the left wheel 312 is supported in the cantilever state at the lower portion of the left telescopic element 33A. Because of this, the rigidity of the right telescopic element 34A and the left telescopic element 33A can be enhanced to thereby enhance the supporting rigidity with which the right wheel 322 is supported on the right telescopic element 34A and the supporting rigidity with which the left wheel 312 is supported on the left telescopic element 33A. The rigidity of the right telescopic element 34A and the left telescopic element 33A can be enhanced, for example, by increasing the diameters thereof. A second moment of area which is an index indicating the rigidity of the right telescopic element 34A and the left telescopic element 33A increases in proportion to a fourth power of the diameter of the right telescopic element 34A and the left telescopic element 33A. Since the second moment of area can be increased sufficiently only by increasing the diameter a little, even in the event that required rigidity is ensured, it is difficult for the right telescopic element 34A and the left telescopic element 33A to be enlarged.

Additionally, the right shaft member 324 penetrates the right telescopic element 34A of which the diameter is increased and the left shaft member 314 penetrates the left telescopic element 33A of which the diameter is increased. Because of this, the right telescopic element 34A ensures the large area where the right shaft member 324 is supported, and the left telescopic element 33A ensures the large area where the left shaft member 314 is supported. This enhances the rigidity with which the right telescopic element 34A supports the right shaft member 324 and the rigidity with which the left telescopic element 33A supports the left shaft member 314. Namely, the supporting rigidity of the right shaft member 324 and the left shaft member 314 are also enhanced by using the right telescopic element 34A and the left telescopic element 33A of which the rigidity is enhanced.

The right telescopic element 34A and the left telescopic element 33A, of which the rigidity is enhanced while restricted from being enlarged in size, are disposed laterally symmetrical and the right shaft member 324 and the left shaft member 314 are disposed laterally symmetrical, whereby the whole of the vehicle 1 is reduced in size in relation to the left-and-right direction thereof.

From the reasons described above, it is possible to provide the vehicle 1 which realizes the further reduction in left-and-right size of the vehicle 1 while ensuring the sufficient rigidity to withstand the loads that the front wheels bear from the road surface.

In the vehicle 1 according to this embodiment, as shown in Fig. 8,
the right wheel 322 includes an annular right rim portion 322b which supports a right tire 321, a right hub portion 322a which is provided radially inwards of the right rim portion 322b, and a right spoke portion 322c which connects the right rim portion 322b and the right hub portion 322a together. The right rim portion 322b, the right hub portion 322a and the right spoke portion 322c are formed integrally. The right hub portion 322a is formed in a position where the right hub portion 322a lies nearer to the right telescopic element 34A than the right rim portion 322b in the left-and-right direction of the body frame 21 in such a state that the vehicle 1 is in the upright state.

The left wheel 312 includes the annular left rim portion 312b which supports the left tire 311, the left hub portion 312a which is provided radially inwards of the left rim portion 312b, and the left spoke portion 312c which connects the left rim portion 312b and the left hub portion 312a together. The left rim portion 312b, the left hub portion 312a and the left spoke portion 312c are formed integrally. The left hub portion 312a is formed in a position where the left hub portion 312a lies nearer to the left telescopic element 33A than the left rim portion 312b in the left-and-right direction of the body frame 21 in such a state that the vehicle 1 is in the upright state.

A load that the right front wheel 32 bears from the road surface is inputted into the right shaft member 324 via the right hub portion 322a. Since the right shaft member 324 is supported in such a state that the right shaft member 324 penetrates the right telescopic element 34A, a bending moment acts on the right telescopic element 34A centered at a point where the right shaft member 324 is supported on the right telescopic element 34A in such a way as to bend the point supported by the right hub portion 322a upwards. Since the right hub portion 322a is provided nearer to the right telescopic element 34A than the right rim portion 322b, the bending moment acting on the right shaft member 324 is reduced.

A load that the left front wheel 31 bears from the road surface is inputted into the left shaft member 314 via the left hub portion 312a. Since the left shaft member 314 is supported in such a state that the left shaft member 314 penetrates the left telescopic element 33A, a bending moment acts on the left telescopic element 33A centered at a point where the left shaft member 314 is supported on the left telescopic element 33A in such a way as to bend the point supported by the left hub portion 312a upwards. Since the left hub portion 312a is provided nearer to the left telescopic element 33A than the left rim portion 312b, the bending moment acting on the left shaft member 314 is reduced.

Consequently, it is easy to ensure the supporting rigidity with which the right shaft member 324 and the left shaft member 314 are supported, thereby making it possible to make the supporting construction smaller in size.

In the vehicle 1 according to this embodiment, as shown in Fig. 8,
the right wheel 322 includes an annular right rim portion 322b which supports a right tire 321, a right hub portion 322a which is provided radially inwards of the right rim portion 322b, and a right spoke portion 322c which connects the right rim portion 322b and the right hub portion 322a together. The right rim portion 322b, the right hub portion 322a and the right spoke portion 322c are formed integrally.

The left wheel 312 includes the annular left rim portion 312b which supports the left tire 311, the left hub portion 312a which is provided radially inwards of the left rim portion 312b, and the left spoke portion 312c which connects the left rim portion 312b and the left hub portion 312a together. The left rim portion 312b, the left hub portion 312a and the left spoke portion 312c are formed integrally.

A right bearing portion 92 includes a plurality of bearings 921, 922 which are aligned in the left-and-right direction of the body frame 21. A left-and-right center I between the plurality of bearings 921, 922 is provided in a position where the center I lies nearer to the right telescopic element 34A than a left-and-right center J of the right rim portion 322b in such a state that the vehicle 1 is in the upright state.

The left bearing portion 91 includes the plurality of bearings 911, 912 which are aligned in the left-and-right direction of the body frame 21. The left-and-right center I between the plurality of bearings 911, 912 is provided in the position where the center I lies nearer to the left telescopic element 33A than the left-and-right center J of the left rim portion 312b in such a state that the vehicle 1 is in the upright state.

It is noted that the left-and-right center I between the plurality of bearings 911, 912 means, as shown in Fig. 8, the center I between the right end of the bearing 912 and the left end of the bearing 911 in relation to the left-and-right direction of the body frame 21.

The load that the right front wheel 32 bears from the road surface is inputted into the right shaft member 324 via the right bearing portion 92 provided at the right hub portion 322a. Since the right shaft member 324 is supported in such a state that the right shaft member 324 penetrates the right telescopic element 34A, a bending moment acts on the right telescopic element 34A centered at a point where the right shaft member 324 is supported on the right telescopic element 34A in such a way as to bend the point supported by the right bearing portion 92 upwards. Since the left-and-right center I of the right bearing portion 92 is provided nearer to the right telescopic element 34A than the left-and-right center J of the right rim portion 322b, the bending moment acting on the right shaft portion 324 is reduced.

The load that the left front wheel 31 bears from the road surface is inputted into the left shaft member 314 via the left bearing portion 91 provided at the left hub portion 312a. Since the left shaft member 314 is supported in such a state that the left shaft member 314 penetrates the left telescopic element 33A, a bending moment acts on the left telescopic element 33Acentered at a point where the left shaft member 314 is supported on the left telescopic element 33A in such a way as to bend the point supported by the left bearing portion 91 upwards. Since the left-and-right center I of the left bearing portion 91 is provided nearer to the left telescopic element 33A than the left-and-right center J of the left rim portion 312b, the bending moment acting on the left shaft portion 314 is reduced.

Consequently, it is easy to ensure the supporting rigidity with which the right shaft member 324 and the left shaft member 314 are supported, thereby making it possible to make the supporting construction smaller in size.

In the vehicle 1 according to this embodiment, as shown in Fig. 8, the right bearing portion 92 includes the plurality of bearings 921, 922 which are aligned in the left-and-right direction of the body frame 21. The bearing 922 of the plurality of bearings 921, 922 which is provided in a position where the bearing 922 lies nearer to the right telescopic element 34A than the other in the left-and-right direction is provided at a middle portion m of the right shaft member 324 when the right shaft member 324 is divided into a right portion r, the middle portion m, and a left portion l in relation to the left-and-right direction of the body frame 21 in an imaginary fashion, with the vehicle 1 being in the upright state.

The left bearing portion 91 includes the plurality of bearings 911, 912 which are aligned in the left-and-right direction of the body frame 21. The bearing 912 of the plurality of bearings 911, 912 which is provided in a position where the bearing 912 lies nearer to the left telescopic element 33A than the other in the left-and-right direction is provided at a middle portion m of the left shaft member 314 when the left shaft member 314 is divided into a right portion r, the middle portion m, and a left portion 1 in relation to the left-and-right direction of the body frame 21 in an imaginary fashion, with the vehicle 1 being in the upright state.

The load that the right front wheel 32 bears from the road surface is inputted into the right shaft member 324 via the right bearing portion 92 provided at the right hub portion 322a. Since the right shaft member 324 is supported in such a state that the right shaft member 324 penetrates the right telescopic element 34A, a bending moment acts on the right telescopic element 34A centered at a point where the right shaft member 324 is supported on the right telescopic element 34A in such a way as to bend the point supported by the right bearing portion 92 upwards. The left portion of the right shaft member 324 is supported by the right telescopic element 34A, the bearing 922 which lies nearer to the right telescopic element 34A is provided at the middle portion m of the right shaft member 324, and the fulcrum and point of action of the bending moment lie near to each other. This makes it easy to reduce the bending moment acting on the right shaft member 324.

The load that the left front wheel 31 bears from the road surface is inputted into the left shaft member 314 via the left bearing portion 91 provided at the left hub portion 312a. Since the left shaft member 314 is supported in such a state that the left shaft member 314 penetrates the left telescopic element 33A, a bending moment acts on the left telescopic element 33Acentered at a point where the left shaft member 314 is supported on the left telescopic element 33A in such a way as to bend the point supported by the left bearing portion 91 upwards. The right portion of the left shaft member 314 is supported by the left telescopic element 33A, the bearing 912 which lies nearer to the left telescopic element 33A is provided at the middle portion m of the left shaft member 314, and the fulcrum and point of action of the bending moment lie near to each other. This makes it easy to reduce the bending moment acting on the left shaft member 314.

Consequently, it is easy to ensure the supporting rigidity with which the right shaft member 324 and the left shaft member 314 are supported, thereby making it possible to make the supporting construction smaller in size.

In the vehicle 1 according to this embodiment, as shown in Fig. 8, the right wheel 322 has a right disc fixing portion 322d where the right brake disc 721 which rotates together with the right wheel 322 is fixed.

The left wheel 312 has a left disc fixing portion 312d where the left brake disc 711 which rotates together with the left wheel 312 is fixed.

The right telescopic element 34A where the right shaft member 324 penetrates the lower portion thereof supports the right brake caliper 722 which holds the right brake disc 721 to apply a braking force to the right front wheel 32.

The left telescopic element 33A where the left shaft member 314 penetrates the lower portion thereof supports the left brake caliper 712 which holds the left brake disc 711 to apply a braking force to the left front wheel 31.

The right bearing portion 92 includes the plurality of bearings 921, 922 which are aligned in the left-and-right direction of the body frame 21. The bearing 922 of the plurality of bearings 921, 922 which is provided in the position where the bearing 922 lies nearer to the right telescopic element 34A than the other in the left-and-right direction is provided in a position where the bearing 922 overlaps the right disc fixing portion 322d in the left-and-right direction of the body frame 21.

The left bearing portion 91 includes the plurality of bearings 911, 912 which are aligned in the left-and-right direction of the body frame 21. The bearing 912 of the plurality of bearings 911, 912 which is provided in the position where the bearing 921 lies nearer to the left telescopic element 33A than the other in the left-and-right direction is provided in a position where the bearing 912 overlaps the left disc fixing portion 312d in the left-and-right direction of the body frame 21.

When the right brake caliper 722 applies a braking force to the right front wheel 32, a load is generated in the right disc fixing portion 322d where the right brake disc 721 is fixed and the right telescopic element 34A where the right brake caliper 722 is supported. This requires the right disc fixing portion 322d and the right telescopic element 34A to ensure the rigidity against these loads.

When the left brake caliper 712 applies a braking force to the left front wheel 31, a load is generated in the left disc fixing portion 312d where the left brake disc 711 is fixed and the left telescopic element 33A where the left brake caliper 712 is supported. This requires the left disc fixing portion 312d and the left telescopic element 33A to ensure the rigidity against these loads.

Since the rigidity of the right telescopic element 34A is enhanced although it is cantilevered, the right brake caliper 722 is supported strongly and rigidly on the right telescopic element 34A. Additionally, since the bearing 922 lying nearer to the right telescopic element 34A is supported with high rigidity, the supporting rigidity of the right wheel 322 is enhanced on the circumference of the bearing 922. Since the right disc fixing portion 322d is provided in the area where the supporting rigidity is high, the rigidity of the right disc fixing portion 322d is ensured.

Since the rigidity of the left telescopic element 33A is enhanced although it is cantilevered, the left brake caliper 712 is supported strongly and rigidly on the left telescopic element 33A. Additionally, since the bearing 912 lying nearer to the left telescopic element 33A is supported with high rigidity, the supporting rigidity of the left wheel 312 is enhanced on the circumference of the bearing 912.

Since the left disc fixing portion 312d is provided in the area where the supporting rigidity is high, the rigidity of the left disc fixing portion 312d is ensured.

In the vehicle 1 according to this embodiment, as shown in Fig. 8, the right wheel 322 has the right brake disc 721 which rotates together with the right wheel 322.

The left wheel 312 has the left brake disc 711 which rotates together with the left wheel 312.

The right telescopic element 34A where the right shaft member 324 penetrates the lower portion thereof supports the right brake caliper 722 which holds the right brake disc 721 to apply a braking force to the right front wheel 32.

The left telescopic element 33A where the left shaft member 314 penetrates the lower portion thereof supports the left brake caliper 712 which holds the left brake disc 711 to apply a braking force to the left front wheel 31.

Since the right telescopic element 34A supports the right shaft member 324 at the lower portion thereof while allowing the right shaft member 324 to penetrate it, the right telescopic element 34A has the high rigidity. Since the right brake caliper 722 is supported on the right telescopic element 34A having the high rigidity, the right brake caliper 722 is supported strongly and rigidly on the right telescopic element 34A. Since the right brake caliper 722 is supported by utilizing the right telescopic element 34A having the enhanced strength to enhance the supporting rigidity of the right wheel 322, a separate construction for supporting the right brake caliper 722 is not necessary or it is difficult for the construction for supporting the right brake caliper 722 to be enlarged in size.

Since the left telescopic element 33A supports the left shaft member 314 at the lower portion thereof while allowing the left shaft member 314 to penetrate it, the left telescopic element 33A has the high rigidity. Since the left brake caliper 712 is supported on the left telescopic element 33A having the high rigidity, the left brake caliper 712 is supported strongly and rigidly on the left telescopic element 33A. Since the left brake caliper 712 is supported by utilizing the left telescopic element 33A having the enhanced strength to enhance the supporting rigidity of the left wheel 312, a separate construction for supporting the left brake caliper 712 is not necessary or it is difficult for the construction for supporting the left brake caliper 712 to be enlarged in size.

Consequently, it is possible to support the right brake caliper 722 and the left brake caliper 712 with high rigidity without enlarging the vehicle 1 in size.

In the vehicle 1 according to this embodiment, as shown in Fig. 8, the right wheel 322 includes the annular right rim portion 322b which supports the right tire 321, the right hub portion 322a which is provided radially inwards of the right rim portion 322b, and the right spoke portion 322c which connects the right rim portion 322b and the right hub portion 322a together. The right rim portion 322b, the right hub portion 322a and the right spoke portion 322c are formed integrally.

The left wheel 312 includes the annular left rim portion 312b which supports the left tire 311, the left hub portion 312a which is provided radially inwards of the left rim portion 312b, and the left spoke portion 312c which connects the left rim portion 312b and the left hub portion 312a together. The left rim portion 312b, the left hub portion 312a and the left spoke portion 312c are formed integrally.

The right wheel 322 has the right disc fixing portion 322d where the right brake disc 721 which rotates together with the right wheel 322 is fixed.

The left wheel 312 has the left disc fixing portion 312d where the left brake disc 711 which rotates together with the left wheel 312 is fixed.

The right telescopic element 34A where the right shaft member 324 penetrates the lower portion thereof supports the right brake caliper 722 which holds the right brake disc 721 to apply a braking force to the right front wheel 32.

The left telescopic element 33A where the left shaft member 314 penetrates the lower portion thereof supports the left brake caliper 712 which holds the left brake disc 711 to apply a braking force to the left front wheel 31.

A length L1 of a space defined between the riht brake caliper 722 and the right rim portion 322b of the right front wheel 32 in relation to the radial direction of the right front wheel 32 is greater than a length L2 of a portion where the right brake caliper 722 overlaps the right brake disc 721.

The length L1 of the space defined between the left brake caliper 712 and the left rim portion 312b of the left front wheel 31 in relation to the radial direction of the left front wheel 31 is greater than the length L2 of the portion where the left brake caliper 712 overlaps the left brake disc 711.

Since the right telescopic element 34A supports the right shaft member 324 at the lower portion thereof while allowing the right shaft member 324 to penetrate it, the right telescopic element 34A has the high rigidity. Since the right brake caliper 722 is supported on the right telescopic element 34A having the high rigidity, the right brake caliper 722 is supported strongly and rigidly on the right telescopic element 34A. Since the right brake caliper 722 is supported by utilizing the right telescopic element 34A having the enhanced strength to enhance the supporting rigidity of the right wheel 322, a separate construction for supporting the right brake caliper 722 is not necessary or it is difficult for the construction for supporting the right brake caliper 722 to be enlarged in size.

Since the left telescopic element 33A supports the left shaft member 314 at the lower portion thereof while allowing the left shaft member 314 to penetrate it, the left telescopic element 33A has the high rigidity. Since the left brake caliper 712 is supported on the left telescopic element 33A having the high rigidity, the left brake caliper 712 is supported strongly and rigidly on the left telescopic element 33A. Since the left brake caliper 712 is supported by utilizing the left telescopic element 33A having the enhanced strength to enhance the supporting rigidity of the left wheel 312, a separate construction for supporting the left brake caliper 712 is not necessary or it is difficult for the construction for supporting the left brake caliper 712 to be enlarged in size.

In addition, in removing the right wheel 322 from the vehicle 1, the right brake caliper 722 needs to be shifted from the right brake disc 721 by the length L2 over which the right brake caliper 722 overlaps the right brake disc 721 in relation to the radial direction of the right front wheel 32. Since the length L1 of the space defined between the right brake caliper 722 and the right rim portion 322b of the right front wheel 32 is greater than the length L2 of the portion where the right brake caliper 722 overlaps the right brake disc 721, it is easy to move the right brake caliper 722 to a position where the right brake caliper 722 does not interfere with the right brake disc 721 by using the space between the right brake caliper 722 and the right rim portion 322b of the right front wheel 32.

In addition, in removing the left wheel 312 from the vehicle 1, the left brake caliper 712 needs to be shifted from the left brake disc 711 by the length L2 over which the left brake caliper 712 overlaps the left brake disc 711 in relation to the radial direction of the left front wheel 31. Since the length L1 of the space defined between the left brake caliper 712 and the left rim portion 312b of the left front wheel 31 is greater than the length L2 of the portion where the left brake caliper 712 overlaps the left brake disc 711, it is easy to move the left brake caliper 712 to a position where the left brake caliper 712 does not interfere with the left brake disc 711 by using the space between the left brake caliper 712 and the left rim portion 312b of the left front wheel 31.

Consequently, the vehicle 1 is provided which can support the right brake caliper 722 and the left brake caliper 712 with the high rigidity without enlarging the vehicle 1 in size and which facilitates the maintenance thereof.

In the vehicle 1 according to this embodiment, as shown in Fig. 8, the right wheel 322 includes the annular right rim portion 322b which supports the right tire 321, the right hub portion 322a which is provided radially inwards of the right rim portion 322b, and the right spoke portion 322c which connects the right rim portion 322b and the right hub portion 322a together. The right rim portion 322b, the right hub portion 322a and the right spoke portion 322c are formed integrally. The right end portion of the right shaft member 324 is provided in the position where the right end portion lies nearer to the right telescopic element 34A than the right end portion of the right hub portion 322a in the left-and-right direction of the body frame 21, with the vehicle 1 being in the upright state.

The left wheel 312 includes the annular left rim portion 312b which supports the left tire 311, the left hub portion 312a which is provided radially inwards of the left rim portion 312b, and the left spoke portion 312c which connects the left rim portion 312b and the left hub portion 312a together. The left rim portion 312b, the left hub portion 312a and the left spoke portion 312c are formed integrally. The left end portion of the left shaft member 314 is provided in the position where the left end portion lies nearer to the left telescopic element 33A than the left end portion of the left hub portion 312a in the left-and-right direction of the body frame 21, with the vehicle 1 being in the upright state.

A load that the right front wheel 32 bears from the road surface is inputted into the right shaft member 324 via the right hub portion 322a. Since the right shaft member 324 is supported in such a state that the right shaft member 324 penetrates the right telescopic element 34A, a bending moment acts on the right telescopic element 34A centered at a point where the right shaft member 324 is supported on the right telescopic element 34A in such a way as to bend the point supported by the right bearing portion 92 upwards. Since the right end portion of the right shaft member 324 is positioned nearer to the right telescopic element 34A than the right end portion of the right hub portion 322a, the fulcrum and point of action of the bending moment are provided nearer to each other. This makes it easy to reduce the bending moment acting on the right shaft member 324.

A load that the left front wheel 31 bears from the road surface is inputted into the left shaft member 314 via the left hub portion 312a. Since the left shaft member 314 is supported in such a state that the left shaft member 314 penetrates the left telescopic element 33A, a bending moment acts on the left telescopic element 33Acentered at a point where the left shaft member 314 is supported on the left telescopic element 33A in such a way as to bend the point supported by the left bearing portion 91 upwards. Since the left end portion of the left shaft member 314 is positioned nearer to the left telescopic element 33A than the left end portion of the left hub portion 312a, the fulcrum and point of action of the bending moment are provided nearer to each other. This makes it easy to reduce the bending moment acting on the left shaft member 314.

Consequently, the required supporting rigidity with which the right shaft member 324 and the left shaft member 314 are supported is reduced, whereby the supporting construction is easily made smaller in size.

In the vehicle 1 according to this embodiment, as shown in Fig. 8, the right wheel 322 includes the annular right rim portion 322b which supports the right tire 321, the right hub portion 322a which is provided radially inwards of the right rim portion 322b, and the right spoke portion 322c which connects the right rim portion 322b and the right hub portion 322a together. The right rim portion 322b, the right hub portion 322a and the right spoke portion 322c are formed integrally.

The vehicle 1 has a right cap 82 which covers the right end portion of the right shaft member 324 and which is shaped so that at least part thereof overlaps the right shaft member 324 in relation to the left-and-right direction of the body frame 21.

The left wheel 312 includes the annular left rim portion 312b which supports the left tire 311, the left hub portion 312a which is provided radially inwards of the left rim portion 312b, and the left spoke portion 312c which connects the left rim portion 312b and the left hub portion 312a together, and the left rim portion 312b, the left hub portion 312a and the left spoke potion 312c are formed integrally.

The vehicle 1 has the left cap 81 which covers the left end portion of the left shaft member 314 and which is shaped so that at least part thereof overlaps the right shaft member 324 in relation to the left-and-right direction of the body frame 21.

The right end portion of the right shaft member 324 can be protected by the right cap 82. Additionally, since at least part of the right cap 82 overlaps the right shaft member 324 in relation to the left-and-right direction of the body frame 21, although the right cap 82 is provided, it is difficult for the vehicle 1 to be enlarged in size in the left-and-right direction.

The left end portion of the left shaft member 314 can be protected by the left cap 81. Additionally, since at least part of the left cap 81 overlaps the left shaft member 314 in relation to the left-and-right direction of the body frame 21, although the left cap 81 is provided, it is difficult for the vehicle 1 to be enlarged in size in the left-and-right direction.

In the vehicle 1 according to this embodiment, as shown in Fig. 8, the right shaft member 324 penetrates the right telescopic element 34A while pressing at least part of the right bearing 92 towards the right telescopic element 34A in the axial direction of the right shaft member 324 and is fastened to the right telescopic element 34A.

The left shaft member 314 penetrates the left telescopic element 33A while pressing at least part of the left bearing 91 towards the left telescopic element 33A in the axial direction of the left shaft member 314 and is fastened to the left telescopic element 33A.

At least part (the inner ring in the example shown) of the right bearing portion 92 is pressed in the axial direction by the right shaft member 324, whereby the right bearing portion 92 is supported strongly and rigidly on the right telescopic element 34A.

At least part (the inner ring in the example shown) of the left bearing portion 91 is pressed in the axial direction by the left shaft member 314, whereby the left bearing portion 91 is supported strongly and rigidly on the left telescopic element 33A.

Consequently, the supporting rigidity of the right wheel 322 and the left wheel 312 can be enhanced.

In the vehicle 1 according to this embodiment, as shown in Fig. 8, the right bearing portion 92 is provided outwards of the right shaft member 324 and the right wheel 322 is provided outwards of the right bearing portion 92 in relation to the radial direction of the right front wheel 32.

The left bearing portion 91 is provided outwards of the left shaft member 314 and the left wheel 312 is provided outwards of the left bearing portion 91 in relation to the radial direction of the left front wheel 31.

The cantilever supporting construction can be realized by adopting the cylindrical right shaft member 324, on an outer circumference of which the right bearing portion 92 is disposed and adopting the cylindrical left shaft member 314, on an outer circumference of which the left bearing portion 91 is disposed. The right wheel 322 and the left wheel 312 can be cantilevered by using the simple and compact right shaft member 324 and left shaft member 314.

In the vehicle 1 according to this embodiment, as shown in Fig. 8, the right wheel 322 has the right brake disc 721 which rotates together with the right wheel 322.

The left wheel 312 has the left brake disc 711 which rotates together with the left wheel 312.

The right brake caliper 722, which holds the right brake disc 721 to thereby apply a braking force to the right front wheel 32, is supported on the right telescopic element 34A.

The left brake caliper 712, which holds the left brake disc 711 to thereby apply a braking force to the left front wheel 31, is supported on the left telescopic element 33A.

In relation to the radial direction of the right front wheel 32, the right bearing portion 92 is provided outwards of the right shaft member 324, the right brake disc 721 is provided outwards of the right bearing portion 92, and the right brake caliper 722 is provided outwards of the right disc brake 721.

In relation to the radial direction of the left front wheel 31, the left bearing portion 91 is provided outwards of the left shaft member 314, the left brake disc 711 is provided outwards of the left bearing portion 91, and the left brake caliper 712 is provided outwards of the left disc brake 711.

The cantilever supporting construction can be realized by adopting the cylindrical right shaft member 324, on an outer circumference of which the right bearing portion 92 is disposed and adopting the cylindrical left shaft member 314, on an outer circumference of which the left bearing portion 91 is disposed. The right wheel 322 and the left wheel 312 can be cantilevered by using the simple and compact right shaft member 324 and left shaft member 314.

Additionally, since the position where the right brake caliper 722 presses against the right brake disc 721 can be provided far away from the right wheel axis Z2 in relation to the radial direction of the right front wheel 32, a large braking force can easily be obtained. Since the position where the left brake caliper 712 presses against the left brake disc 711 can be provided far away from the left wheel axis Z1 in relation to the radial direction of the left front wheel 31, a large braking force can easily be obtained.

In the vehicle 1 according to this embodiment, as shown in Fig. 8, the right shaft member 324 has a right bolt element 324d which penetrates the right telescopic element 34A and the right bearing portion 92 and a right nut element 324c which fits on the right bolt element 324d.

The left shaft member 314 has the left bolt element 314d which penetrates the left telescopic element 33A and the left bearing portion 91 and the left nut element 314c which fits on the left bolt element 314d.

With the simple configurations, the right shaft member 324 and the left shaft member 314 can be provided where the right wheel 322 and the left wheel 312 can be cantilevered strongly and rigidly.

In the vehicle 1 according to this embodiment, as shown in Fig. 8, the right shock absorber 34 includes a plurality of right telescopic elements which are aligned in the front-and-rear direction of the body frame 21.

The left shock absorber 33 includes the plurality of left telescopic elements which are aligned in the front-and-rear direction of the body frame 21.

The suspension device supports the right wheel 322 in the cantilever state at the lower portion of the plurality of right telescopic elements 34A which are aligned in the front-and-rear direction by at least one of the right telescopic elements and the right shaft member 324 which penetrates the right bearing portion 92 and supports the left wheel 312 in the cantilever state at the lower portion of the plurality of left telescopic elements 33A by at least one of the left telescopic elements and the left shaft member 314 which penetrates the left bearing portion 91.

Since the right telescopic element has the plurality of right telescopic elements of a right rear telescopic element 341 and a right front telescopic element 342 which are aligned in the front-and-rear direction, the rigidity of the right shock absorber 34 can be enhanced higher than when only one right telescopic element is used while restricting the enlargement in size of the vehicle in relation to the left-and-right direction. In addition, the rigidity of the right shock absorber 34 can be enhanced higher by using the plurality of right telescopic elements which are thin in diameter while restricting the enlargement in size of the vehicle in relation to the left-and-right direction.

Since the left telescopic element has the plurality of left telescopic elements of the left rear telescopic element 331 and the left front telescopic element 332 which are aligned in the front-and-rear direction, the rigidity of the left shock absorber 33 can be enhanced higher than when only one left telescopic element is used while restricting the enlargement in size of the vehicle in relation to the left-and-right direction. In addition, the rigidity of the left shock absorber 33 can be enhanced higher by using the plurality of left telescopic elements which are thin in diameter while restricting the enlargement in size of the vehicle in relation to the left-and-right direction.

Because of this, it is easy to make the right shock absorber 34 and the left shock absorber 33 smaller in size in relation to the left-and-right direction, whereby it is easy to ensure the sufficient rigidity while cantilevering the right wheel 322 and the left wheel 312 with the supporting construction which is compact in relation to the left-and-right direction.

The embodiment that has been described heretofore is intended to facilitate the understanding of the invention and is not intended to limit the invention. It is obvious that the invention can be modified or improved without departing from the scope thereof as defined in the claims.

The terms and expressions that are used in this description are used to describe the embodiment of the invention.

In the embodiment described above, while the bearing portion is described as including the two bearings, the invention is not limited thereto. The bearing portion may include a plurality of bearings which are three or more. In any case, the left-and-right center of the bearings is positioned further inwards than the center of the wheel in relation to the vehicle's width direction.

In the embodiment described above, while the right shock absorber 34 is described as including the two right telescopic elements which are aligned in the front-and-rear direction of the body frame 21 and the left shock absorber 33 is described as including the two left telescopic elements which are aligned in the front-and-rear direction of the body frame 21, the invention is not limited thereto. For example, the right shock absorber may include three or more telescopic elements which are aligned in the front-and-rear direction and the left shock absorber may include three or more telescopic elements which are aligned in the front-and-rear direction. The right shock absorber may include a single telescopic element and the left shock absorber may include a single telescopic element.

In addition, in the embodiment described above, while the right telescopic element 34A is described as being provided on the left side of the right front wheel 32 which faces the body frame 21 and the left telescopic element 33A is described as being provided on the right side of the left front wheel 31 which faces the body frame 21, the invention is not limited thereto. The right telescopic element 34A may be provided on the right side of the right front wheel 32 which lies farther away from the body frame 21, and the left telescopic element 33A may be provided on the left side of the left front wheel 31 which lies farther away from the body frame 21.

In the embodiment described above, while the left wheel axle 314 is described as penetrating the left axle support portion 333 which connects the cylindrical left front telescopic element 332 and left rear telescopic element 331 together which are aligned in the front-and-rear direction, the left wheel axle 314 may penetrate the cylindrical left front telescopic element 332 itself or left rear telescopic element 331 itself. While the right wheel axle 324 is described as penetrating the right axle support portion 343 which connects the cylindrical right front telescopic element 342 and right rear telescopic element 341 together which are aligned in the front-and-rear direction, the right wheel axle 324 may penetrate the cylindrical right front telescopic element 342 itself or right rear telescopic element 341 itself.

### [Acute Angles]

In the invention and the embodiment, the acute angles are angles that include 0° and that are smaller than 90°. Originally, the acute angles do not include 0°, but in the invention and the embodiment, it is understood that the acute angles include 0°. In the embodiment, the imaginary plane that intersects perpendicularly the upper axes and the lower axes of the cross members is a plane that extends rearwards and upwards. However, the invention is not limited thereto, and hence, the imaginary plane that intersects perpendicularly the upper axes and the lower axes of the cross members may be a plane that extends forwards and upwards.

### [Parallel, Extend, Along]

When referred to in this description, "parallel" also includes two straight lines that do not intersect each other as members while they are inclined within the range of ± 40°. When used together with a "direction" and a "member" in the invention, "along" also includes a case where what follows the direction and the member is inclined relative thereto within the range of ± 40°. When used together with a "direction" in the invention, "extend" also includes a case where what extends is inclined relative to the direction within the range of ± 40°.

### [Wheels, Power Unit, Body Cover]

The vehicle 1 according to the invention is the vehicle 1 including the body frame which can lean and the two front wheels. The number of rear wheels may be one or more. The vehicle may include a body cover that covers the body frame. The vehicle may not include the body cover which covers the body frame. The power unit includes the power source. The power source is not limited to the engine and hence may be an electric motor.

In this embodiment, the center in the left-and-right direction of the body frame 21 of the rear wheel 4 coincides with the center in the left-and-right direction of the body frame 21 of the distance defined between the left front wheel 31 and the right front wheel 32. Although the configuration described above is preferable, the center in the left-and-right direction of the body frame 21 of the rear wheel 4 does not have to coincide with the center in the left-and-right direction of the body frame 21 of the distance defined between the left front wheel 31 and the right front wheel 32.

### [Positional Relationship between Headstock and Side Portions]

In the embodiments described above, the right side portion 54, the left side portion 53 and the headstock 211 are provided in the positions that overlap when the vehicle 1 is seen from the side thereof. However, when the vehicle 1 is seen from the side thereof, the headstock 211 may be provided in a different position from the positions where the right side portion 54 and the left side portion 53 are provided in relation to the front-and-rear direction. Additionally, angles at which the right side portion 54 and the left side portion 53 lean from the up-and-down direction of the body frame 21 may differ from an angle at which the headstock 211 leans.

### [Headstock]

The headstock that supports the link mechanism may be made up of a single piece of part or a plurality of parts. In the case of the headstock being made up of a plurality of parts, the parts may be joined together through welding, bonding or the like. Alternatively, the parts may be joined together with fastening members such as bolts, rivets or the like.

### [Body Frame Configuration: Integral or Separate, Upper end of Front Edge when integral, Configuration of Upper and Lower Frame Portions]

In this embodiment, the body frame has the link support portion that supports the link such as the headstock, the connecting member (the upper front and rear frame portions), the down frame (the upper and lower frame portions) and the under frame (the lower front and rear frame portions), and these constituent parts are connected together through welding. However, the body frame of the invention is not limited to the embodiment. The body frame should have the link support portion, the upper front and rear frame portions, the upper and lower frame portions and the lower front and rear frame portions. For example, the body frame may be formed integrally wholly or partially through casting. Additionally, in the body frame, the upper front and rear frame portions and the upper and lower frame portions may be made up of a single member or may be made up of separate members.

### [Magnitude of Acute Angle: Steering Shaft and Shock Absorbers]

In the embodiment described above, the left shock absorber 33 and the right shock absorber 34 each include the pair of telescopic mechanisms. However, depending upon the specification of the vehicle 1, the number of telescopic mechanisms that the left shock absorber 33 and the right shock absorber 34 include individually may be one.

In this embodiment, an acute angle formed by the turning axis of the steering shaft and the up-and-down direction of the body frame coincides with an acute angle formed by the direction in which the right shock absorber and the left shock absorber extend or contract and the up-and-down direction of the body frame. However, the invention is not limited to the embodiment described above . For example, the acute angle formed by the middle steering axis Y3 of the steering shaft and the up-and-down direction of the body frame may be smaller or larger than the acute angle formed by the direction in which the right shock absorber and the left shock absorber extend or contract and the up-and-down direction of the body frame.

In addition, in the embodiment, the middle steering axis Y3 of the steering shaft and the direction in which the right shock absorber and the left shock absorber extend or contact coincide with each other. However, the invention is not limited to the embodiment described above. In a side view of the vehicle being in the upright state, the turning axis of the steering shaft and the direction in which the right shock absorber and the left shock absorber extend or contact may be spaced away from each other in the front-and-rear direction. Additionally, for example, the turning axis of the steering shaft and the direction in which the right shock absorber and the left shock absorber extend or contact may intersect each other.

Further, in this embodiment, the direction in which the right shock absorber extends and contracts coincides with right steering axis Y2 of the right shock absorber, and the direction in which the right shock absorber extends and contracts coincides with the left steering axis Y1 of the left shock absorber. However, the invention is not limited to the embodiment described above. The direction in which the right shock absorber extends and contracts may not coincide with the right steering axis Y2 of the right shock absorber, and the direction in which the right shock absorber extends and contracts may not coincide with the left steering axis Y1 of the left shock absorber.

In this embodiment, the right front wheel and the left front wheel are supported so that their upper ends can move further upwards in the up-and-down direction of the body frame than an upper end of the down frame of the body frame. However, the invention is not limited to the embodiment. In this invention, the right front wheel and the left front wheel may be able to move upwards as high as or to a height that is lower than the upper end of the down frame of the body frame in the up-and-down direction of the body frame.

### [Cross portions, Side Portions]

The upper cross portion may include an upper front cross portion that is made up of a single part, an upper rear cross portion that is made up of a single part, and a connecting member that is provided between the upper and lower cross portions and that is made up of a plurality of parts. In the case of the headstock being made up of a plurality of parts, the parts may be joined together through welding, bonding or the like. Alternatively, the parts may be joined together with fastening members such as bolts, rivets or the like.

The lower cross portion may include a lower front cross portion that is made up of a single part, a lower rear cross portion that is made up of a single part and a connecting member that is provided between the lower front and rear cross portions and that is made up of a plurality of parts. In the case of the headstock being made up of a plurality of parts, the parts may be joined together through welding, bonding or the like. Alternatively, the parts may be joined together with fastening members such as bolts, rivets or the like.

The right side portion and the left side portion may each be made up of a single part or a plurality of parts. In the case of the headstock being made up of a plurality of parts, the parts may be joined together through welding, bonding or the like. Alternatively, the parts may be joined together with fastening members such as bolts, rivets or the like. The right side portion and the left side portion may each include a portion that is disposed ahead of the upper cross portion or the lower cross portion in the front-and-rear direction of the body frame and a portion that is disposed behind the upper cross portion or the lower cross portion in the front-and-rear direction of the body frame. The upper cross portion or the lower cross portion may be disposed between the portions that are disposed ahead of the right side portion and the left side portion and the portions that are disposed behind the right side portion and the left side portion.

In the invention, the link mechanism may include further a cross portion in addition to the upper cross portion and the lower cross portion. The upper cross portion and the lower cross portion are so called only from their relative positional relationship in the up-and-down direction. The upper cross portion does not imply an uppermost cross portion in the link mechanism. The upper cross portion means a cross portion that lies above a cross portion that lies therebelow. The lower cross portion does not imply a lowermost cross portion in the link mechanism. The lower cross portion means a cross portion that lies below a cross portion that lies thereabove. Additionally, the cross portion may be made up of two parts of a right cross portion and a left cross portion. In this way, the upper cross portion and the lower cross portion may each include a plurality of cross portions as long as they still exhibit the link function. Further, other cross portions may be provided between the upper cross portion and the lower cross portion. The link mechanism should include the upper cross portion and the lower cross portion.

The invention can be embodied in many different forms. This disclosure should be understood to provide a principle embodiment of the invention. Based on the understanding that the preferred embodiments that are described and/or illustrated herein are not intended to limit the invention thereto, several embodiments are described and illustrated herein.

Several illustrated embodiments of the invention are described herein. The invention is not limited to the various preferred embodiments described herein.

The embodiments should be construed to be non-exclusive. For example, in this disclosure, such terms as "preferable" and "good" are non-exclusive terms and mean that "it is preferable but does not limit the invention thereto" and "it is good but does not limit the invention thereto," respectively.

## Claims

1. A vehicle (1) comprising:
a body frame (21) which can lean to the right of the vehicle (1) when the vehicle (1) turns right and can lean to the left of the vehicle (1) when the vehicle (1) turns left;
a right front wheel (32) which includes a right tire (321) and a right wheel (322) which supports the right tire (321) and a left front wheel (31) which includes a left tire (311) and a left wheel (312) which supports the left tire (311), the right front wheel (32) and the left front wheel (31) being provided so as to be aligned in a left-and-right direction of the body frame (21); and
a suspension device which includes a right shock absorbing device (34) which includes a right telescopic element (34A) configured to support the right wheel (322) via a right bearing portion (92) which is provided on the right wheel (322) so as to rotate about a right front wheel axis (Z2) and to absorb a displacement of the right front wheel (32) in an up-and-down direction of the body frame (21) and a left shock absorbing device (33) which includes a left telescopic element (33A) configured to support the left wheel (312) via a left bearing portion (91) which is provided on the left wheel (312) so as to rotate about a left front wheel axis (Z1) and to absorb a displacement of the left front wheel (31) in the up-and-down direction of the body frame (21) and which supports the right front wheel (32) and the left front wheel (31) on the body frame (21) in such a state that the right front wheel (32) and the left front wheel (31) can be displaced in the up-and-down direction of the body frame (21) and are aligned in the left-and-right direction of the body frame (21), wherein
the suspension device supports the right wheel (322) in a cantilever state so as to turn about a right steering axis (Y2) which extends in a perpendicular direction to the right front wheel axis (Z2) and to be displaced in the up-and-down direction relative to the body frame (21) at a lower portion of the right telescopic element (34A) by a right shaft member (324) which penetrates the right telescopic element (34A) and the right bearing portion (92) and supports the left wheel (312) in a cantilever state so as to turn about a left steering axis (Y1) which extends in a perpendicular direction to the left front wheel axis (Z1) and to be displaced in the up-and-down direction relative to the body frame (21) at a lower portion of the left telescopic element (33A) by a left shaft member (314) which penetrates the left telescopic element (33A) and the left bearing portion (91), wherein the right telescopic element (34A) and the left telescopic element (33A) are disposed laterally symmetrical and the right shaft member (324) and the left shaft member (314) are disposed laterally symmetrical in such a state that the vehicle (1) is in an upright state, wherein
the right wheel (322) includes an annular right rim portion (322b) which supports the right tire (321), a right hub portion (322a) which is provided radially inwards of the right rim portion (322b), and a right spoke portion (322c) which connects the right rim portion (322b) and the right hub portion (322a), the right rim portion (322b), the right hub portion (322a) and the right spoke portion (322c) being formed integrally, wherein
the left wheel (312) includes an annular left rim portion (312b) which supports the left tire (311), a left hub portion (312a) which is provided radially inwards of the left rim portion (312b), and a left spoke portion (312c) which connects the left rim portion (312b) and the left hub portion (312a), the left rim portion (312b), the left hub portion (312a) and the left spoke portion (312c) being formed integrally, wherein
the right bearing portion (92) includes a plurality of bearings (921, 922) which are aligned in the left-and-right direction of the body frame (21), and a left-and-right center (I) of the plurality of bearings (921, 922) is provided in a position where the left-and-right center (I) lies nearer to the right telescopic element (34A) than a left-and-right center (J) of the right rim portion (322b) in such a state that the vehicle (1) is in the upright state, wherein the left bearing portion (91) includes a plurality of bearings (911, 912) which are aligned in the left-and-right direction of the body frame (21), and a left-and-right center (I) of the plurality of bearings (911, 912) is provided in a position where the left-and-right center (I) lies nearer to the left telescopic element (33A) than a left-and-right center (J) of the left rim portion (312b) in such a state that the vehicle (I) is in the upright state, wherein
the left-and-right center (I) of the plurality of bearings (921, 922) of the right bearing portion (92) is a center between a right end portion of the right end bearing (921) and a left end portion of the left end bearing (922) in relation to the left-and-right direction of the body frame (21), wherein
the left-and-right center (I) of the plurality of bearings (911, 912) of the left bearing portion (91) is a center between a right end portion of the right end bearing (912) and a left end portion of the left end bearing (911) in relation to the left-and-right direction of the body frame (21), wherein
the right bearing portion (92) is provided at the right hub portion (322a), and wherein
the left bearing portion (91) is provided at the left hub portion (312a).

2. The vehicle (1) according to Claim 1, wherein
the right hub portion (322a) is formed in a position where the right hub portion (322a) lies nearer to the right telescopic element (34A) than the right rim portion (322b) in the left-and-right direction of the body frame (21) in such a state that the vehicle (1) is in the upright state, and wherein the left hub portion (312a) is formed in a position where the left hub portion (312a) lies nearer to the left telescopic element (33A) than the left rim portion (312b) in the left-and-right direction of the body frame (21) in such a state that the vehicle (1) is in the upright state.

3. The vehicle (I) according to Claim 1 or 2, wherein
the right bearing portion (92) includes the plurality of bearings (921, 922) which are aligned in the left-and-right direction of the body frame (21), and the bearing (922) of the plurality of bearings (921, 922) which is provided in a position nearer to the right telescopic element (34A) in the left-and-right direction of the body frame (21) is provided at a middle portion (m)
of the right shaft member (324) in the left-and-right direction of the body frame (21) in such a state that the vehicle (1) is in the upright state, and wherein
the left bearing portion (91) includes the plurality of bearings (911, 912) which are aligned in the left-and-right direction of the body frame (21), and the bearing (912) of the plurality of bearings (911, 912) which is provided in a position nearer to the left telescopic element (33A) in the left-and-right direction of the body frame (21) is provided at a middle portion (m)
of the left shaft member (314) in the left-and-right direction of the body frame (21) in such a state that the vehicle (1) is in the upright state.

4. The vehicle (1) according to any of Claims 1 to 3, wherein
the right wheel (322) has a right disc fixing portion (322d) where a right brake disc (721) which rotates together with the right wheel (322) is fixed, wherein
the left wheel (312) has a left disc fixing portion (312d) where a left brake disc (711) which rotates together with the left wheel (312) is fixed, wherein
the right telescopic element (34A) which the right shaft member (324) penetrates at a lower portion thereof supports a right brake caliper (722) which is configured to hold the right brake disc (721) to apply a braking force to the right front wheel (32), wherein
the left telescopic element (33A) which the left shaft member (314) penetrates at a lower portion thereof supports a left brake caliper (712) which is configured to hold the left brake disc (711) to apply a braking force to the left front wheel (31), wherein
the right bearing portion (92) includes the plurality of bearings (921, 922) which are aligned in the left-and-right direction of the body frame (21), and the bearing (922) of the plurality of bearings (921, 922) which is provided in a position lying nearer to the right telescopic element (34A) in the left-arid-right direction of the body frame (21) is provided in a position where the
bearing (922) overlaps the right disc fixing portion (322d) in relation to the left-and-right direction of the body frame (21), and wherein
the left bearing portion (92) includes the plurality of bearings (911, 912) which are aligned in the left-and-right direction of the body frame (21), and the bearing (912) of the plurality of bearings (911, 912) which is provided in a position lying nearer to the left telescopic element (33A) in the left-and-right direction of the body frame (21) is provided in a position where the
bearing (912) overlaps the left disc fixing portion (312d) in relation to the left-and-right direction of the body frame (21).

5. The vehicle (1) according to anyone of Claims 1 to 4, wherein
the right wheel (322) has a right brake disc (721) which rotates together with the right wheel (322), wherein
the left wheel (312) has a left brake disc (711) which rotates together with the left wheel (312), wherein
the right telescopic element (34A) which the right shaft member (324) penetrates at a lower portion thereof supports a right brake caliper (722) which is configured to hold the right brake disc (721) to apply a braking force to the right front wheel (32), and wherein
the left telescopic element (33A) which the left shaft member (314) penetrates at a lower portion thereof supports a left brake caliper (712) which is configured to hold the left brake disc (711) to apply a braking force to the left front wheel (31).

6. The vehicle according to anyone of Claims 1 to 5, wherein
the right wheel (322) has a right disc fixing portion (322d) where a right brake disc (721) which rotates together with the right wheel (322) is fixed, wherein
the left wheel (312) has a left disc fixing portion (312d) where a left brake disc (711) which rotates together with the left wheel (312) is fixed, wherein
the right telescopic element (34A) which the right shaft member (324) penetrates at a lower portion thereof supports a right brake caliper (722) which is configured to hold the right brake disc (721) to apply a braking force to the right front wheel (32), wherein
the left telescopic element (33A) which the left shaft member (314) penetrates at a lower portion thereof supports a left brake caliper (712) which is configured to hold the left brake disc (711) to
apply a braking force to the left front wheel (31), wherein
a length (L1) of a space defined between the right brake caliper (722) and the right rim portion (322b) of the right front wheel (32) in relation to a radial direction of the right front wheel (32) is greater than a length (L2) of a portion where the right brake caliper (722) overlaps the right brake disc (721), and wherein
a length (L1) of a space defined between the left brake caliper (712) and the left rim portion (312b) of the left front wheel (31) in relation to a radial direction of the left front wheel (31) is greater than a length (L2) of a portion where the left brake caliper (712) overlaps the left brake disc (711).

7. The vehicle (1) according to anyone of Claims 1 to 6, wherein
a right end portion of the right shaft member (324) is provided in a position where the right end portion lies nearer to the right telescopic element (34A) than a right end portion of the right hub portion (322a) in the left-and-right direction of the body frame (21) in such a state that the vehicle (1) is in the upright state, and wherein
a left end portion of the left shaft member (314) is provided in a position where the left end portion lies nearer to the left telescopic element (33A) than a left end portion of the left hub portion (312a) in the left-and-right direction of the body frame (21) in such a state that the vehicle (1) is in the upright state.

8. The vehicle (1) according to anyone of Claims 1 to 7, wherein
the right wheel (322) has a right cap (82) which covers the right end portion of the right shaft member (324) and which is so shaped that at least part thereof overlaps the right shaft member (324) in relation to the left-and-right direction of the body frame (21), and wherein
the left wheel (312) has a left cap (81) which covers the left end portion of the left shaft member (314) and which is so shaped that at least part thereof overlaps the right shaft member (314) in relation to the left-and-right direction of the body frame (21).

9. The vehicle (1) according to anyone of Claims 1 to 8, wherein
the right shaft member (324) penetrates the right telescopic element (34A) while pressing at least part of the right bearing portion (92) towards the right telescopic element (34A) in an axial direction of the right shaft member (324) and is fastened to the right telescopic element (34A), and wherein
the left shaft member (314) penetrates the left telescopic element (33A) while pressing at least part of the left bearing portion (91) towards the left telescopic element (33A) in an axial direction of the left shaft member (314) and is fastened to the left telescopic element (33A).

10. The vehicle (1) according to anyone of Claims 1 to 9, wherein
in relation to the radial direction of the right front wheel (32), the right bearing portion (92) is provided outwards of the right shaft member (324), and the right wheel (322) is provided outwards of the right bearing portion (92), and wherein
in relation to the radial direction of the left front wheel (31), the left bearing portion (91) is provided outwards of the left shaft member (314), and the left wheel (312) is provided outwards of the left bearing portion (91).

11. The vehicle (1) according to anyone of Claims 1 to 10, wherein
the right wheel (322) has the right brake disc (721) which rotates together with the right wheel (322), wherein
the left wheel (312) has the left brake disc (711) which rotates together with the left wheel (312), wherein
the right brake caliper (722) which is configured to hold the right brake disc (721) to apply a braking
force to the right front wheel (32) is supported on the right telescopic element (34A), wherein
the left brake caliper (712) which is configured to hold
the left brake disc (711) to apply a braking force
to the left front wheel (31) is supported on the left telescopic element (33A), wherein
in relation to the radial direction of the right front wheel (32), the right bearing portion (92) is provided outwards of the right shaft member (324), the right brake disc (721) is provided outwards of the right bearing portion (92), and the right brake caliper (722) is provided outwards of the right brake disc (721), and wherein
in relation to the radial direction of the left front wheel (31), the left bearing portion (91) is provided outwards of the left shaft member (314), the left brake disc (711) is provided outwards of the left bearing portion (91), and the left brake caliper (712) is provided outwards of the left brake disc (711).

12. The vehicle (1) according to anyone of Claims 1 to 11, wherein
the right shaft member (324) has a right bolt element (324d) which penetrates the right telescopic element (34A) and the right bearing portion (92) and a right nut element (324c) which fits on the right bolt element (324d), and wherein
the left shaft member (314) has a left bolt element (314d) which penetrates the left telescopic element (33A) and the left bearing portion (91) and a left nut element (314c) which fits on the left bolt element (314d).

13. The vehicle (1) according to anyone of Claims 1 to 12, wherein
the right shock absorbing device (34) includes a plurality of right telescopic elements (34A) which are aligned in a front-and-rear direction of the body frame (21), wherein the left shock absorbing device (33) includes a plurality of left telescopic elements (33A) which are aligned in the front-and-rear direction of the body frame (21), and wherein the suspension device supports the right wheel (322) in a cantilever state at a lower portion of the plurality of right telescopic elements (34A) which are aligned in the front-and-rear direction of the body frame (21) by using at least one of the right telescopic elements (34A) and the right shaft member (324) which penetrates the right bearing portion (92) and supports the left wheel (312) in a cantilever state at a lower portion of the plurality of left telescopic elements (33A) which are aligned in the front-and-rear direction of the body frame (21) by using at least one of
the left telescopic elements (33A) and the left shaft member (314) which penetrates the left bearing portion (91).

## Patentansprüche

1. Fahrzeug (1), das umfasst:
einen Karosserierahmen (21), der sich zur rechten Seite des Fahrzeugs (1) neigen kann, wenn das Fahrzeug (1) nach rechts abbiegt, und der sich zur linken Seite des Fahrzeugs (1) neigen kann, wenn das Fahrzeug (1) nach links abbiegt;
ein rechtes Vorderrad (32), das einen rechten Reifen (321) und ein rechtes Rad (322) einschließt, das den rechten Reifen (321) trägt, sowie ein linkes Vorderrad (31), das einen linken Reifen (311) und ein linkes Rad (312) einschließt, das den linken Reifen (311) trägt, wobei das rechte Vorderrad (32) und das linke Vorderrad (31) so angeordnet sind, dass sie in einer Querrichtung des Karosserierahmens (21) ausgerichtet sind; sowie
eine Aufhängungs-Vorrichtung, die eine rechte Stoßdämpf-Vorrichtung (34), die ein rechtes Teleskop-Element (34A) einschließt, das so eingerichtet ist, dass es das rechte Rad (322) über einen rechten Lagerungs-Abschnitt (92) trägt, der an dem rechten Rad (322) so angeordnet ist, dass er sich um eine Achse (Z2) des rechten Vorderrades herum dreht, und eine Verschiebung des rechten Vorderrades (32) in einer vertikalen Richtung des Karosserierahmens (21) absorbiert, sowie eine linke Stoßdämpf-Vorrichtung (33) einschließt, die ein linkes Teleskop-Element (33A) einschließt, das so eingerichtet ist, dass es das linke Rad (312) über einen linken Lagerungs-Abschnitt (91) trägt, der an dem linken Rad (312) so angeordnet ist, dass er sich um eine Achse (Z1) des linken Vorderrades herum dreht, und eine Verschiebung des linken Vorderrades (31) in der vertikalen Richtung des Karosserierahmens (21) absorbiert, und die das rechte Vorderrad (32) sowie das linke Vorderrad (31) an dem Karosserierahmen (21) in einem Zustand trägt, in dem das rechte Vorderrad (32) und das linke Vorderrad (31) in der vertikalen Richtung des Karosserierahmens (21) verschoben werden können und in der Querrichtung des Karosserierahmens (21) ausgerichtet sind, wobei
die Aufhängungs-Vorrichtung das rechte Rad (322) an einem unteren Abschnitt des rechten Teleskop-Elementes (34A) über ein rechtes Wellen-Element (324), das sich durch das rechte Teleskop-Element (34A) und den rechten Lagerungs-Abschnitt (92) hindurch erstreckt, in einem Ausleger-Zustand so trägt, dass es sich um eine rechte Lenk-Achse (Y2) herum dreht, die sich in einer Richtung senkrecht zu der Achse (Z2) des rechten Vorderrades erstreckt, und dass es in der vertikalen Richtung relativ zu dem Karosserierahmen (21) verschoben wird, und das linke Rad (312) an einem unteren Abschnitt des linken Teleskop-Elementes (33A) über ein linkes Wellen-Element (314), das sich durch das linke Teleskop-Element (33A) und den linken Lagerungs-Abschnitt (91) hindurch erstreckt, in einem Ausleger-Zustand so trägt, dass es sich um eine linke Lenk-Achse (Y1) herum dreht, die sich in einer Richtung senkrecht zu der Achse (Z1) des linken Vorderrades erstreckt, und dass es in der vertikalen Richtung relativ zu dem Karosserierahmen (21) verschoben wird, wobei
wenn sich das Fahrzeug (1) in einem aufrechtstehenden Zustand befindet, das rechte Teleskop-Element (34A) und das linke Teleskop-Element (33A) in Querrichtung symmetrisch angeordnet sind und das rechte Wellen-Element (324) und das linke Wellen-Element (314) in Querrichtung symmetrisch angeordnet sind,
das rechte Rad (322) einen ringförmigen rechten Kranz-Abschnitt (322b), der den rechten Reifen (321) trägt, einen rechten Naben-Abschnitt (322a), der radial innerhalb des rechten Kranz-Abschnitts (322b) liegt, sowie einen rechten Speichen-Abschnitt (322c) einschließt, der den rechten Kranz-Abschnitt (322b) und den rechten Naben-Abschnitt (322a) verbindet, wobei der rechte Kranz-Abschnitt (322b), der rechte Naben-Abschnitt (322a) und der rechte Speichen-Abschnitt (322c) integral ausgebildet sind, und
das linke Rad (312) einen ringförmigen linken Kranz-Abschnitt (312b), der den linken Reifen (311) trägt, einen linken Naben-Abschnitt (312a), der radial innerhalb des linken Kranz-Abschnitts (312b) liegt, sowie einen linken Speichen-Abschnitt (312c) einschließt, der den linken Kranz-Abschnitt (312b) und den linken Naben-Abschnitt (312a) verbindet, wobei der linke Kranz-Abschnitt (312b), der linke Naben-Abschnitt (312a) und der linke Speichen-Abschnitt (312c) integral ausgebildet sind, und
der rechte Lagerungs-Abschnitt (92) eine Vielzahl von Lagern (921, 922) enthält, die in der Querrichtung des Karosserierahmens (21) ausgerichtet sind, und, wenn sich das Fahrzeug (1) in dem aufrechtstehenden Zustand befindet, sich eine Mitte (I) der Vielzahl von Lagern (921, 922) in Querrichtung an einer Position befindet, an der die Mitte (I) in Querrichtung näher an dem rechten Teleskop-Element (34A) liegt als eine Mitte (J) des rechten Kranz-Abschnitts (322b) in Querrichtung, und
der linke Lagerungs-Abschnitt (91) eine Vielzahl von Lagern (911, 912) enthält, die in der Querrichtung des Karosserierahmens (21) ausgerichtet sind, und, wenn sich das Fahrzeug (1) in dem aufrechtstehenden Zustand befindet, sich eine Mitte (I) der Vielzahl von Lagern (911, 912) in Querrichtung an einer Position befindet, an der die Mitte (I) in Querrichtung näher an dem linken Teleskop-Element (33A) liegt als eine Mitte (J) des linken Kranz-Abschnitts (312b) in Querrichtung, und
die Mitte (I) der Vielzahl von Lagern (921, 922) des rechten Lagerungs-Abschnitts (92) in Querrichtung eine Mitte zwischen einem rechten Endabschnitt des rechten End-Lagers (921) und einem linken Endabschnitt des linken End-Lagers (922) in Bezug auf die Querrichtung des Karosserierahmens (21) ist, und
die Mitte (I) der Vielzahl von Lagern (911, 912) des linken Lagerungs-Abschnitts (91) in Querrichtung eine Mitte zwischen einem rechten Endabschnitt des rechten End-Lagers (912) und einem linken Endabschnitt des linken End-Lagers (911) in Bezug auf die Querrichtung des Karosserierahmens (21) ist, und
der rechte Lagerungs-Abschnitt (92) sich an dem rechten Naben-Abschnitt (322a) befindet, und
der linke Lagerungs-Abschnitt (91) sich an dem linken Naben-Abschnitt (312a) befindet.

2. Fahrzeug (1) nach Anspruch 1, wobei
der rechte Naben-Abschnitt (322a) an einer Position ausgebildet ist, an der, wenn sich das Fahrzeug (1) in dem aufrechtstehenden Zustand befindet, der rechte Naben-Abschnitt (322a) in der Querrichtung des Karosserierahmens (21) näher an dem rechten Teleskop-Element (34A) liegt als der rechte Kranz-Abschnitt (322b), und
der linke Naben-Abschnitt (312a) an einer Position ausgebildet ist, an der, wenn sich das Fahrzeug (1) in dem aufrechtstehenden Zustand befindet, der linke Naben-Abschnitt (312a) in der Querrichtung des Karosserierahmens (21) näher an dem linken Teleskop-Element (33A) liegt als der linke Kranz-Abschnitt (312b).

3. Fahrzeug (1) nach Anspruch 1 oder 2, wobei
der rechte Lagerungs-Abschnitt (92) die Vielzahl von Lagern (921, 922) einschließt, die in der Querrichtung des Karosserierahmens (21) ausgerichtet sind, und, wenn sich das Fahrzeug (1) in dem aufrechtstehenden Zustand befindet, sich das Lager (922) der Vielzahl von Lagern (921, 922), das sich in der Querrichtung des Karosserierahmens (21) an einer Position näher an dem rechten Teleskop-Element (34A) befindet, an einem mittleren Abschnitt (m) des rechten Wellen-Elementes (324) in der Querrichtung des Karosserierahmens (21) befindet, und
der linke Lagerungs-Abschnitt (91) die Vielzahl von Lagern (911, 912) einschließt, die in der Querrichtung des Karosserierahmens (21) ausgerichtet sind, und, wenn sich das Fahrzeug (1) in dem aufrechtstehenden Zustand befindet, sich das Lager (912) der Vielzahl von Lagern (911, 912), das sich in der Querrichtung des Karosserierahmens (21) an einer Position näher an dem linken Teleskop-Element (33A) befindet, an einem mittleren Abschnitt (m) des linken Wellen-Elementes (314) in der Querrichtung des Karosserierahmens (21) befindet.

4. Fahrzeug (1) nach einem der Ansprüche 1 bis 3, wobei
das rechte Rad (322) einen rechten Scheiben-Befestigungsabschnitt (322d) aufweist, an dem eine rechte Bremsscheibe (721) befestigt ist, die sich zusammen mit dem rechten Rad (322) dreht, und
das linke Rad (312) einen linken Scheiben-Befestigungsabschnitt (312d) aufweist, an dem eine linke Bremsscheibe (711) befestigt ist, die sich zusammen mit dem linken Rad (312) dreht, und
das rechte Teleskop-Element (34A), durch das sich das rechte Wellen-Element (324) an einem unteren Abschnitt desselben hindurch erstreckt, einen rechten Bremssattel (722) trägt, der so eingerichtet ist, dass er die rechte Bremsscheibe (721) hält, um eine Bremskraft auf das rechte Vorderrad (32) auszuüben, und
das linke Teleskop-Element (33A), durch das sich das linke Wellen-Element (314) an einem unteren Abschnitt desselben hindurch erstreckt, einen linken Bremssattel (712) trägt, der so eingerichtet ist, dass er die linke Bremsscheibe (711) hält, um eine Bremskraft auf das linke Vorderrad (31) auszuüben, und
der rechte Lagerungs-Abschnitt (92) die Vielzahl von Lagern (921, 922) einschließt, die in der Querrichtung des Karosserierahmens (21) ausgerichtet sind, und sich das Lager (922) der Vielzahl von Lagern (921, 922), das sich in der Querrichtung des Karosserierahmens (21) an einer Position befindet, die näher an dem rechten Teleskop-Element (34A) liegt, an einer Position befindet, an der das Lager (922) den rechten Scheiben-Befestigungsabschnitt (322d) in Bezug auf die Querrichtung des Karosserierahmens (21) überlappt, und
der linke Lagerungs-Abschnitt (92) die Vielzahl von Lagern (911, 912) einschließt, die in der Querrichtung des Karosserierahmens (21) ausgerichtet sind, und sich das Lager (912) der Vielzahl von Lagern (911, 912), das sich in der Querrichtung des Karosserierahmens (21) an einer Position befindet, die näher an dem linken Teleskop-Element (33A) liegt, an einer Position befindet, an der das Lager (912) den linken Scheiben-Befestigungsabschnitt (312d) in Bezug auf die Querrichtung des Karosserierahmens (21) überlappt.

5. Fahrzeug (1) nach einem der Ansprüche 1 bis 4, wobei
das rechte Rad (322) eine rechte Bremsscheibe (721) aufweist, die sich zusammen mit dem rechten Rad (322) dreht, und
das linke Rad (312) eine linke Bremsscheibe (711) aufweist, die sich zusammen mit dem linken Rad (312) dreht, und
das rechte Teleskop-Element (34A), durch das sich das rechte Wellen-Element (324) an einem unteren Abschnitt desselben hindurch erstreckt, einen rechten Bremssattel (722) trägt, der so eingerichtet ist, dass er die rechte Bremsscheibe (721) hält, um eine Bremskraft auf das rechte Vorderrad (32) auszuüben, und
das linke Teleskop-Element (33A), durch das sich das linke Wellen-Element (314) an einem unteren Abschnitt desselben hindurch erstreckt, einen linken Bremssattel (712) trägt, der so eingerichtet ist, dass er die linke Bremsscheibe (711) hält, um eine Bremskraft auf das linke Vorderrad (31) auszuüben.

6. Fahrzeug nach einem der Ansprüche 1 bis 5, wobei
das rechte Rad (322) einen rechten Scheiben-Befestigungsabschnitt (322d) aufweist, an dem eine rechte Bremsscheibe (721) befestigt ist, die sich zusammen mit dem rechten Rad (322) dreht, und
das linke Rad (312) einen linken Scheiben-Befestigungsabschnitt (322d) aufweist, an dem eine linke Bremsscheibe (711) befestigt ist, die sich zusammen mit dem linken Rad (312) dreht, und
das rechte Teleskop-Element (34A), durch das sich das rechte Wellen-Element (324) an einem unteren Abschnitt desselben hindurch erstreckt, einen rechten Bremssattel (722) trägt, der so eingerichtet ist, dass er die rechte Bremsscheibe (721) hält, um eine Bremskraft auf das rechte Vorderrad (32) auszuüben, und
das linke Teleskop-Element (33A), durch das sich das linke Wellen-Element (314) an einem unteren Abschnitt desselben hindurch erstreckt, einen linken Bremssattel (712) trägt, der so eingerichtet ist, dass er die linke Bremsscheibe (711) hält, um eine Bremskraft auf das linke Vorderrad (31) auszuüben, und
eine Länge (L1) eines Raums, der zwischen dem rechten Bremssattel (722) und dem rechten Kranz-Abschnitt (322b) des rechten Vorderrades (32) ausgebildet ist, in Bezug auf eine radiale Richtung des rechten Vorderrades (32) größer ist als eine Länge (L2) eines Abschnitts, an dem der rechte Bremssattel (722) die rechte Bremsscheibe (721) überlappt, und
eine Länge (L1) eines Raums, der zwischen dem linken Bremssattel (712) und dem linken Kranz-Abschnitt (312b) des linken Vorderrades (31) ausgebildet ist, in Bezug auf eine radiale Richtung des linken Vorderrades (31) größer ist als eine Länge (L2) eines Abschnitts, an dem der linke Bremssattel (712) die linke Bremsscheibe (711) überlappt.

7. Fahrzeug (1) nach einem der Ansprüche 1 bis 6, wobei
sich ein rechter Endabschnitt des rechten Wellen-Elementes (324) an einer Position befindet, an der, wenn sich das Fahrzeug (1) in dem aufrechtstehenden Zustand befindet, der rechte Endabschnitt in der Querrichtung des Karosserierahmens (21) näher an dem rechten Teleskop-Element (34A) liegt als ein rechter Endabschnitt des rechten Naben-Abschnitts (322a), und
sich ein linker Endabschnitt des linken Wellen-Elementes (314) an einer Position befindet, an der, wenn sich das Fahrzeug (1) in dem aufrechtstehenden Zustand befindet, der linke Endabschnitt in der Querrichtung des Karosserierahmens (21) näher an dem linken Teleskop-Element (33A) liegt als ein linker Endabschnitt des linken Naben-Abschnitts (312a).

8. Fahrzeug (1) nach einem der Ansprüche 1 bis 7, wobei
das rechte Rad (322) eine rechte Kappe (82) aufweist, die den rechten Endabschnitt des rechten Wellen-Elementes (324) abdeckt und die so geformt ist, dass wenigstens ein Teil derselben das rechte Wellen-Element (324) in Bezug auf die Querrichtung des Karosserierahmens (21) überlappt, und
das linke Rad (312) eine linke Kappe (81) aufweist, die den linken Endabschnitt des linken Wellen-Elementes (314) abdeckt und die so geformt ist, dass wenigstens ein Teil derselben das linke Wellen-Element (314) in Bezug auf die Querrichtung des Karosserierahmens (21) überlappt.

9. Fahrzeug (1) nach einem der Ansprüche 1 bis 8, wobei
das rechte Wellen-Element (324) sich durch das rechte Teleskop-Element (34A) hindurch erstreckt und dabei wenigstens ein Teil des rechten Lagerungs-Abschnitts (92) in einer axialen Richtung des rechten Wellen-Elementes (324) auf das rechte Teleskop-Element (34A) zu gepresst wird und an dem rechten Teleskop-Element (34A) befestigt wird, und
das linke Wellen-Element (314) sich durch das linke Teleskop-Element (33A) hindurch erstreckt und dabei wenigstens ein Teil des linken Lagerungs-Abschnitts (91) in einer axialen Richtung des linken Wellen-Elementes (314) auf das linke Teleskop-Element (33A) zu gepresst wird und an dem linken Teleskop-Element (33A) befestigt wird.

10. Fahrzeug (1) nach einem der Ansprüche 1 bis 9, wobei
in Bezug auf die radiale Richtung des rechten Vorderrades (32) sich der rechte Lagerungs-Abschnitt (92) außerhalb des rechten Wellen-Elementes (324) befindet und sich das rechte Rad (322) außerhalb des rechten Lagerungs-Abschnitts (92) befindet, und
in Bezug auf die radiale Richtung des linken Vorderrades (31) sich der linke Lagerungs-Abschnitt (91) außerhalb des linken Wellen-Elementes (314) befindet und sich das linke Rad (312) außerhalb des linken Lagerungs-Abschnitts (91) befindet.

11. Fahrzeug (1) nach einem der Ansprüche 1 bis 10, wobei
das rechte Rad (322) die rechte Bremsscheibe (721) aufweist, die sich zusammen mit dem rechten Rad (322) dreht, und
das linke Rad (312) die linke Bremsscheibe (711) aufweist, die sich zusammen mit dem linken Rad (312) dreht, und
der rechte Bremssattel (722), der so eingerichtet ist, dass er die rechte Bremsscheibe (721) hält, um eine Bremskraft auf das rechte Vorderrad (32) auszuüben, von dem rechten Teleskop-Element (34A) getragen wird, und
der linke Bremssattel (712), der so eingerichtet ist, dass er die linke Bremsscheibe (711) hält, um eine Bremskraft auf das linke Vorderrad (31) auszuüben, von dem linken Teleskop-Element (33A) getragen wird, und
in Bezug auf die radiale Richtung des rechten Vorderrades (32) sich der rechte Lagerungs-Abschnitt (92) außerhalb des rechten Wellen-Elementes (324) befindet, sich die rechte Bremsscheibe (721) außerhalb des rechten Lagerungs-Abschnitts (92) befindet und sich der rechte Bremssattel (722) außerhalb der rechten Bremsscheibe (721) befindet, und
in Bezug auf die radiale Richtung des linken Vorderrades (31) sich der linke Lagerungs-Abschnitt (91) außerhalb des linken Wellen-Elementes (314) befindet, sich die linke Bremsscheibe (711) außerhalb des linken Lagerungs-Abschnitts (91) befindet und sich der linke Bremssattel (712) außerhalb der linken Bremsscheibe (711) befindet.

12. Fahrzeug (1) nach einem der Ansprüche 1 bis 11, wobei
das rechte Wellen-Element (324) ein rechtes Schrauben-Element (324d), das sich durch das rechte Teleskop-Element (34A) und den rechten Lagerungs-Abschnitt (92) hindurch erstreckt, sowie ein rechtes Muttern-Element (324c) aufweist, das auf das rechte Schrauben-Element (324d) passt, und
das linke Wellen-Element (314) ein linkes Schrauben-Element (314d), das sich durch das linke Teleskop-Element (33A) und den linken Lagerungs-Abschnitt (91) hindurch erstreckt, sowie ein linkes Muttern-Element (314c) aufweist, das auf das linke Schrauben-Element (314d) passt.

13. Fahrzeug (1) nach einem der Ansprüche 1 bis 12, wobei
die rechte Stoßdämpf-Vorrichtung (34) eine Vielzahl rechter Teleskop-Elemente (34A) einschließt, die in der Längsrichtung des Karosserierahmens (21) ausgerichtet sind, und
die linke Stoßdämpf-Vorrichtung (33) eine Vielzahl linker Teleskop-Elemente (33A) einschließt, die in der Längsrichtung des Karosserierahmens (21) ausgerichtet sind, und
die Aufhängungs-Vorrichtung das rechte Rad (322) unter Verwendung wenigstens eines der rechten Teleskop-Elemente (34A) sowie des rechten Wellen-Elementes (324), das sich durch den rechten Lagerungs-Abschnitt (92) hindurch erstreckt, in einem Ausleger-Zustand an einem unteren Abschnitt der Vielzahl rechter Teleskop-Elemente (34A) trägt, die in der Längsrichtung des Karosserierahmens (21) ausgerichtet sind, und das linke Rad (312) unter Verwendung wenigstens eines der linken Teleskop-Elemente (33A) und des linken Wellen-Elementes (314), das sich durch den linken Lagerungs-Abschnitt (91) hindurch erstreckt, in einem Ausleger-Zustand an einem unteren Abschnitt der Vielzahl linker Teleskop-Elemente (33A) trägt, die in der Längsrichtung des Karosserierahmens (21) ausgerichtet sind.

## Revendications

1. Véhicule (1) comprenant :
un corps de châssis (21) qui peut se pencher vers la droite du véhicule (1) quand le véhicule (1) tourne à droite et qui peut se pencher vers la gauche du véhicule (1) quand le véhicule (1) tourne à gauche ;
une roue avant droite (32) qui comprend un pneu droit (321) et une roue droite (322) qui supporte le pneu droit (321) et une roue avant gauche (31) qui comprend un pneu gauche (311) et une roue gauche (312) qui supporte le pneu gauche (311), la roue avant droite (32) et la roue avant gauche (31) étant pourvues de manière à être alignées en direction gauche-droite du corps de châssis (21) ; et
un dispositif de suspension qui comprend un dispositif amortisseur droit (34) qui comprend un élément télescopique droit (34A) configuré pour supporter la roue droite (322) via une portion de palier droite (92) qui est pourvue sur la roue droite (322) de manière à tourner autour d'un axe de roue avant droite (Z2) et à absorber un déplacement de la roue avant droite (32) en direction haut-bas du corps de châssis (21), et un dispositif amortisseur gauche (33) qui comprend un élément télescopique gauche (33A) configuré pour supporter la roue gauche (312) via une portion de palier gauche (91) qui est pourvue sur la roue gauche (312) de manière à tourner autour d'un axe de roue avant gauche (Z1) et à absorber un déplacement de la roue avant gauche (31) en direction haut-bas du corps de châssis (21), et qui supporte la roue avant droite (32) et la roue avant gauche (31) sur le corps de châssis (21) dans un état tel que la roue avant droite (32) et la roue avant gauche (31) peuvent être déplacées en direction haut-bas du corps de châssis (21) et sont alignées en direction gauche-droite du corps de châssis (21), dans lequel
le dispositif de suspension supporte la roue droite (322) en porte-à-faux de manière à tourner autour d'un axe de direction droit (Y2) qui s'étend en direction perpendiculaire à l'axe de la roue avant droite (Z2) et à être déplacé en direction haut-bas par rapport au corps de châssis (21) dans une portion inférieure de l'élément télescopique droit (34A) par un élément d'axe droit (324) qui pénètre l'élément télescopique droit (34A) et la portion de palier droite (92), et supporte la roue gauche (312) en porte-à-faux de manière à tourner autour d'un axe de direction gauche (Y1) qui s'étend en direction perpendiculaire à l'axe de la roue avant gauche (Z1) et à être déplacé en direction haut-bas par rapport au corps de châssis (21) dans une portion inférieure de l'élément télescopique gauche (33A) par un élément d'axe gauche (314) qui pénètre l'élément télescopique gauche (33A) et la portion de palier gauche (91), dans lequel l'élément télescopique droit (34A) et l'élément télescopique gauche (33A) sont disposés de manière latéralement symétrique et l'élément d'axe droit (324) et l'élément d'axe gauche (314) sont disposés de manière latéralement symétrique dans un état où le véhicule (1) est debout, dans lequel
la roue droite (322) comprend une portion de jante droite annulaire (322b) qui supporte le pneu droit (321), une portion de moyeu droite (322a) qui est pourvue radialement vers l'intérieur de la portion de jante droite (322b), et une portion de rayon droit (322c) qui connecte la portion de jante droite (322b) et la portion de moyeu droite (322a), la portion de jante droite (322b), la portion de moyeu droite (322a) et la portion de rayon droit (322c) étant formées de manière intégrée, dans lequel
la roue gauche (312) comprend une portion de jante gauche annulaire (312b) qui supporte le pneu gauche (311), une portion de moyeu gauche (312a) qui est pourvue radialement vers l'intérieur de la portion de jante gauche (312b), et une portion de rayon gauche (312c) qui connecte la portion de jante gauche (312b) et la portion de moyeu gauche (312a), la portion de jante gauche (312b), la portion de moyeu gauche (312a) et la portion de rayon gauche (312c) étant formées de manière intégrée, dans lequel
la portion de palier droite (92) comprend une pluralité de paliers (921, 922) qui sont alignés en direction gauche-droite du corps de châssis (21), et un centre gauche-et-droit (I) de la pluralité de paliers (921, 922) est pourvu dans une position où le centre gauche-et-droit (I) se trouve plus près de l'élément télescopique droit (34A) qu'un centre gauche-et-droit (J) de la portion de jante droite (322b) dans un état où le véhicule (1) est debout, dans lequel
la portion de palier gauche (91) comprend une pluralité de paliers (911, 912) qui sont alignés en direction gauche-droite du corps de châssis (21), et un centre gauche-et-droit (I) de la pluralité de paliers (911, 912) est pourvu dans une position où le centre gauche-et-droit (I) se trouve plus près de l'élément télescopique gauche (33A) qu'un centre gauche-et-droit (J) de la portion de jante gauche (312b) dans un état où le véhicule (1) est debout, dans lequel
le centre gauche-et-droit (I) de la pluralité de paliers (921, 922) de la portion de palier droite (92) est un centre entre une portion d'extrémité droite du palier d'extrémité droite (921) et une portion d'extrémité gauche du palier d'extrémité gauche (922) par rapport à la direction gauche-droite du corps de châssis (21), dans lequel
le centre gauche-et-droit (I) de la pluralité de paliers (911, 912) de la portion de palier gauche (91) est un centre entre une portion d'extrémité droite du palier d'extrémité droite (911) et une portion d'extrémité gauche du palier d'extrémité gauche (912) par rapport à la direction gauche-droite du corps de châssis (21), dans lequel
la portion de palier droite (92) est pourvue sur la portion de moyeu droite (322a), et dans lequel
la portion de palier gauche (91) est pourvue sur la portion de moyeu gauche (312a).

2. Véhicule (1) selon la revendication 1, dans lequel
la portion de moyeu droite (322a) est formée à une position où la portion de moyeu droite (322a) se trouve plus près de l'élément télescopique droit (34A) que la portion de jante droite (322b) en direction gauche-droite du corps de châssis (21) dans un état où le véhicule (1) est debout, et dans lequel
la portion de moyeu gauche (312a) est formée à une position où la portion de moyeu gauche (312a) se trouve plus près de l'élément télescopique gauche (33A) que la portion de jante gauche (312b) en direction gauche-droite du corps de châssis (21) dans un état où le véhicule (1) est debout.

3. Véhicule (1) selon la revendication 1 ou 2, dans lequel
la portion de palier droite (92) comprend la pluralité de paliers (921, 922) qui sont alignés en direction gauche-droite du corps de châssis (21), et le palier (922) de la pluralité de paliers (921, 922) qui est pourvu à une position plus proche de l'élément télescopique droit (34A) en direction gauche-droite du corps de châssis (21) est pourvu dans une portion médiane (m) de l'élément d'axe droit (324) en direction gauche-droite du corps de châssis (21) dans un état où le véhicule (1) est debout, et dans lequel
la portion de palier gauche (91) comprend une pluralité de paliers (911, 912) qui sont alignés en direction gauche-droite du corps de châssis (21), et le palier (912) de la pluralité de paliers (911, 912) qui est pourvu à une position plus proche de l'élément télescopique gauche (33A) en direction gauche-droite du corps de châssis (21) est pourvu dans une portion médiane (m) de l'élément d'axe gauche (314) en direction gauche-droite du corps de châssis (21) dans un état où le véhicule (1) est debout.

4. Véhicule (1) selon l'une quelconque des revendications 1 à 3, dans lequel
la roue droite (322) comporte une portion de fixation de disque droit (322d) où est fixé un disque de frein droit (721) qui tourne conjointement à la roue droite (322), dans lequel
la roue gauche (312) comporte une portion de fixation de disque gauche (312d) où est fixé un disque de frein gauche (711) qui tourne conjointement à la roue gauche (312), dans lequel
l'élément télescopique droit (34A) qui est pénétré dans sa portion inférieure par l'élément d'axe droit (324) supporte un étrier de frein droit (722) qui est configuré pour supporter le disque de frein droit (721) afin d'appliquer une force de freinage à la roue avant droite (32), dans lequel
l'élément télescopique gauche (33A) qui est pénétré dans sa portion inférieure par l'élément d'axe gauche (314) supporte un étrier de frein gauche (712) qui est configuré pour supporter le disque de frein gauche (711) afin d'appliquer une force de freinage à la roue avant gauche (31), dans lequel
la portion de palier droite (92) comprend la pluralité de paliers (921, 922) qui sont alignés en direction gauche-droite du corps de châssis (21), et le palier (922) de la pluralité de paliers (921, 922) qui est pourvu à une position plus proche de l'élément télescopique droit (34A) en direction gauche-droite du corps de châssis (21) est pourvu à une position où le palier (922) chevauche la portion de fixation de disque droit (322d) par rapport à la direction gauche-droite du corps de châssis (21), et dans lequel
la portion de palier gauche (92) comprend la pluralité de paliers (911, 912) qui sont alignés en direction gauche-droite du corps de châssis (21), et le palier (912) de la pluralité de paliers (911, 912) qui est pourvu à une position plus proche de l'élément télescopique gauche (33A) en direction gauche-droite du corps de châssis (21) est pourvu à une position où le palier (912) chevauche la portion de fixation de disque gauche (312d) par rapport à la direction gauche-droite du corps de châssis (21).

5. Véhicule (1) selon l'une quelconque des revendications 1 à 4, dans lequel
la roue droite (322) comporte un disque de frein droit (721) qui tourne conjointement à la roue droite (322), dans lequel
la roue gauche (312) comporte un disque de frein gauche (711) qui tourne conjointement à la roue gauche (312), dans lequel
l'élément télescopique droit (34A) qui est pénétré dans sa portion inférieure par l'élément d'axe droit (324) supporte un étrier de frein droit (722) qui est configuré pour supporter le disque de frein droit (721) afin d'appliquer une force de freinage à la roue avant droite (32), dans lequel
l'élément télescopique gauche (33A) qui est pénétré dans sa portion inférieure par l'élément d'axe gauche (314) supporte un étrier de frein gauche (712) qui est configuré pour supporter le disque de frein gauche (711) afin d'appliquer une force de freinage à la roue avant gauche (31) .

6. Véhicule selon l'une quelconque des revendications 1 à 5, dans lequel
la roue droite (322) comporte une portion de fixation de disque droit (322d) où est fixé un disque de frein droit (721) qui tourne conjointement à la roue droite (322), dans lequel
la roue gauche (312) comporte une portion de fixation de disque gauche (312d) où est fixé un disque de frein gauche (711) qui tourne conjointement à la roue gauche (312), dans lequel
l'élément télescopique droit (34A) qui est pénétré dans sa portion inférieure par l'élément d'axe droit (324) supporte un étrier de frein droit (722) qui est configuré pour supporter le disque de frein droit (721) afin d'appliquer une force de freinage à la roue avant droite (32), dans lequel
l'élément télescopique gauche (33A) qui est pénétré dans sa portion inférieure par l'élément d'axe gauche (314) supporte un étrier de frein gauche (712) qui est configuré pour supporter le disque de frein gauche (711) afin d'appliquer une force de freinage à la roue avant gauche (31), dans lequel
la longueur (L1) d'un espace défini entre l'étrier de frein droit (722) et la portion de jante droite (322b) de la roue avant droite (32) par rapport à la direction radiale de la roue avant droite (32) est supérieure à la longueur (L2) d'une portion où l'étrier de frein droit (722) chevauche le disque de frein droit (721), et dans lequel
la longueur (L1) d'un espace défini entre l'étrier de frein gauche (712) et la portion de jante gauche (312b) de la roue avant gauche (31) par rapport à la direction radiale de la roue avant gauche (31) est supérieure à la longueur (L2) d'une portion où l'étrier de frein gauche (712) chevauche le disque de frein gauche (711).

7. Véhicule (1) selon l'une quelconque des revendications 1 à 6, dans lequel
une portion d'extrémité droite de l'élément d'axe droit (324) est pourvue dans une position où la portion d'extrémité droite est plus proche de l'élément télescopique droit (34A) qu'une portion d'extrémité droite de la portion de moyeu droite (322a) en direction gauche-droite du corps de châssis (21) dans un état où le véhicule (1) est debout, et dans lequel
une portion d'extrémité gauche de l'élément d'axe gauche (314) est pourvue dans une position où la portion d'extrémité gauche est plus proche de l'élément télescopique gauche (33A) qu'une portion d'extrémité gauche de la portion de moyeu gauche (312a) en direction gauche-droite du corps de châssis (21) dans un état où le véhicule (1) est debout.

8. Véhicule (1) selon l'une quelconque des revendications 1 à 7, dans lequel
la roue droite (322) comporte un chapeau droit (82) qui recouvre la portion d'extrémité droite de l'élément d'axe droit (324) et qui est conformé de telle sorte qu'au moins une partie du chapeau chevauche l'élément d'axe droit (324) en direction gauche-droite du corps de châssis (21), et dans lequel
la roue gauche (312) comporte un chapeau gauche (81) qui recouvre la portion d'extrémité gauche de l'élément d'axe gauche (314) et qui est conformé de telle sorte qu'au moins une partie du chapeau chevauche l'élément d'axe gauche (314) en direction gauche-droite du corps de châssis (21) .

9. Véhicule (1) selon l'une quelconque des revendications 1 à 8, dans lequel
l'élément d'axe droit (324) pénètre l'élément télescopique droit (34A) tout en poussant au moins une partie de la portion de palier droite (92) vers l'élément télescopique droit (34A) en direction axiale de l'élément d'axe droit (324) et est fixé à l'élément télescopique droit (34A), et dans lequel
l'élément d'axe gauche (314) pénètre l'élément télescopique gauche (33A) tout en poussant au moins une partie de la portion de palier gauche (91) vers l'élément télescopique gauche (33A) en direction axiale de l'élément d'axe gauche (314) et est fixé à l'élément télescopique gauche (33A).

10. Véhicule (1) selon l'une quelconque des revendications 1 à 9, dans lequel
par rapport à la direction radiale de la roue avant droite (32), la portion de palier droite (92) est pourvue à l'extérieur de l'élément d'axe droit (324), et la roue droite (322) est pourvue à l'extérieur de la portion de palier droite (92), et dans lequel
par rapport à la direction radiale de la roue avant gauche (31), la portion de palier gauche (91) est pourvue à l'extérieur de l'élément d'axe gauche (314), et la roue gauche (312) est pourvue à l'extérieur de la portion de palier gauche (91).

11. Véhicule (1) selon l'une quelconque des revendications 1 à 10, dans lequel
la roue droite (322) comporte le disque de frein droit (721) qui tourne conjointement à la roue droite (322), dans lequel
la roue gauche (312) comporte le disque de frein gauche (711) qui tourne conjointement à la roue gauche (312), dans lequel
l'étrier de frein droit (722) qui est configuré pour maintenir le disque de frein droit (721) pour appliquer une force de freinage à la roue avant droite (32) est supporté sur l'élément télescopique droit (34A), dans lequel
l'étrier de frein gauche (712) qui est configuré pour maintenir le disque de frein gauche (711) pour appliquer une force de freinage à la roue avant gauche (31) est supporté sur l'élément télescopique gauche (33A), dans lequel
par rapport à la direction radiale de la roue avant droite (32), la portion de palier droite (92) est pourvue à l'extérieur de l'élément d'axe droit (324), le disque de frein droit (721) est pourvu à l'extérieur de la portion de palier droite (92), et l'étrier de frein droit (722) est pourvu à l'extérieur du disque de frein droit (721), et dans lequel
par rapport à la direction radiale de la roue avant gauche (31), la portion de palier gauche (91) est pourvue à l'extérieur de l'élément d'axe gauche (314), le disque de frein gauche (711) est pourvu à l'extérieur de la portion de palier gauche (91), et l'étrier de frein gauche (712) est pourvu à l'extérieur du disque de frein gauche (711).

12. Véhicule (1) selon l'une quelconque des revendications 1 à 11, dans lequel
l'élément d'axe droit (324) comporte un élément de boulon droit (324d) qui pénètre l'élément télescopique droit (34A) et la portion de palier droite (92), et un élément d'écrou droit (324c) qui se monte sur l'élément de boulon droit (324d), et dans lequel
l'élément d'axe gauche (314) comporte un élément de boulon gauche (314d) qui pénètre l'élément télescopique gauche (33A) et la portion de palier gauche (91), et un élément d'écrou gauche (314c) qui se monte sur l'élément de boulon gauche (314d).

13. Véhicule (1) selon l'une quelconque des revendications 1 à 12, dans lequel
le dispositif amortisseur droit (34) comprend une pluralité d'éléments télescopiques droits (34A) qui sont alignés en direction avant-arrière du corps de châssis (21), dans lequel
le dispositif amortisseur gauche (33) comprend une pluralité d'éléments télescopiques gauches (33A) qui sont alignés en direction avant-arrière du corps de châssis (21), et dans lequel
le dispositif de suspension supporte la roue droite (322) en porte-à-faux dans une portion inférieure de la pluralité d'éléments télescopiques droits (34A) qui sont alignés en direction avant-arrière du corps de châssis (21) en utilisant au moins un des éléments télescopiques droits (34A) et l'élément d'axe droit (324) qui pénètre la portion de palier droite (92) et supporte la roue gauche (312) en porte-à-faux dans une portion inférieure de la pluralité d'éléments télescopiques gauches (33A) qui sont alignés en direction avant-arrière du corps de châssis (21) en utilisant au moins un des éléments télescopiques gauches (33A) et l'élément d'axe gauche (314) qui pénètre la portion de palier gauche (91).
